# EUROPEAN PATENT SPECIFICATION

(11) **EP 2 008 921 B1**
(45) Date of publication and mention of the grant of the patent: **08.06.2011**
(21) Application number: 08158665.3
(22) Date of filing: 20.06.2008
(51) Int. Cl.: B62J 1/18

(54) **Seat cover**
Sitzbezug
Housse de siège

(30) Priority: 25.06.2007 JP 2007166191
(43) Date of publication of application: 31.12.2008
(73) Proprietor: Honda Access Corp., SAITAMA-KEN (JP)
(72) Inventor: Azuma, Yumiko c/o Honda Access Corp., Niiza-shi, Saitama-ken (JP)
(74) Representative: Quinterno, Giuseppe

(56) References cited:
- JP-A- 2002 274 238
- JP-A- 2003 291 709
- JP-A- 2008 029 753
- JP-U- 59 149 581
- US-A1- 2004 095 001

## Description

The present invention relates to a seat cover of the kind defined in the preamble of claim 1.

A seat cover of that kind, used for a saddle-type vehicle seat, is disclosed in JP 2003291709A (figure 9). The same document with reference to figure 10 discloses a similar seat cover for a seat including a passenger seat portion which is located higher than the driver seat portion, whereby a rump support for the driver is provided by the shape of the seat, rather than by the seat cover.

It is an object of the present invention to provide an improved seat cover of the initially defined kind.

The above object is achieved according to the invention by a seat cover having the features defined in claim 1.

According to a second aspect of the invention said supporting portion is formed so as to have a width less than that of said saddle-type vehicle seat, said supporting face taking the form of a substantially crescent shape, having a concavely curved surface.

According to a third aspect of the invention said cover main body comprises an anterior portion, a driver portion, a passenger portion and a posterior side portion, wherein said anterior portion, driver portion, passenger portion and posterior side portion are integrated with one another, and said anterior portion and posterior side portion are each made from a material harder than said driver portion and passenger portion, formed to a length long enough to extend down to a bottom surface of said saddle-type vehicle seat, and said cover main body is attached to said saddle-type vehicle seat with tension being applied in an anteroposterior direction of said saddle-type-vehicle.

According to a fourth aspect of the invention said driver portion is formed from a three-dimensional textile.

According to the present invention, it is possible to support a driver's rump reliably. Moreover, it can be readily converted into a tandem type seat enabling two persons to ride by simply detaching the seat cover.

According to the second aspect of the invention, the supporting portion can be allowed to well fit to a driver's rump.

Further, according to the third aspect of the invention, stable use of the seat cover can be ensured, while preventing the displacement of the supporting portion during the use.

Still further, according to the fourth aspect of the invention, more airflow is allowed to flow through the seating surface, thus enabling the seat temperature in summer to be lowered.
Fig. 1 is a side view showing an overall structure of a vehicle equipped with a seat cover in accordance with a first embodiment of the present invention.
Fig. 2 is a schematic view showing the structure of the seat cover of Fig. 1, in which (A) is a perspective view of the seat, while (B) a perspective view of the seat cover attached to the seat.
Fig. 3 is an exploded perspective view of the seat cover of Fig. 2.
Fig. 4 is a schematic diagram illustrating how the stitch of a three-dimensional textile extends relative to a front-to-rear direction of the vehicle in the seat cover of the first embodiment.
Fig. 5 is a bottom plan view showing the structure of a seating portion thereof.
Fig. 6 is a perspective view showing the structure of a filler member thereof.
Fig. 7 is a perspective view showing the structure of a lid member thereof.
Fig. 8 is a perspective view showing the structure of a flexible member thereof.
Fig. 9 is a bottom perspective view showing the structure of a supporting portion thereof.
Fig. 10 is a bottom perspective view of the supporting portion thereof.
Fig. 11 is a top perspective view showing a modified example of the supporting portion in accordance with the first embodiment of the present invention.
Fig. 12 is another top perspective view of the supporting portion in accordance with the first embodiment of the present invention.
Fig. 13 is a diagram showing another modified example of the supporting portion in accordance with the first embodiment of the present invention, illustrating a positional relationship of the supporting portion relative to the seat, in which (A) is a top perspective view thereof, while (B) a side view thereof.
Fig. 14 is a schematic diagram illustrating the seat cover of the first embodiment of the present invention in process of being attached to the seat, in which (A) is a top perspective view thereof prior to the attachment, while (B) a bottom perspective view thereof at the time of the attachment.
Fig. 15 is a perspective view showing the structure of a seat cover in accordance with a second embodiment of the present invention.
Fig. 16 is a fragmentary longitudinal section of the seat cover of Fig. 15.
Fig. 17 is a perspective view showing the structure of a frame body thereof.
Fig. 18 is a perspective view showing the structure of a seat cover in accordance with a third embodiment of the present invention.
Fig. 19 is an exploded perspective view showing the structure of the seat cover thereof.
Fig. 20 is a cross-sectional view of the seat cover thereof that is in a joined state, in which (A) is a section taken along A-A line of Fig. 18, while (B) a section taken along B-B line thereof.
Fig. 21 is an exploded perspective view showing the structure of a seat cover in accordance with a fourth embodiment of the present invention.
Fig. 22 is a bottom plan view showing the structure of a seating portion thereof.
Fig. 23 is a cross-sectional view of the seat cover thereof that is in a joined state, in which (A) is a section taken along a portion corresponding to A-A line of Fig. 18, while (B) a section taken along a portion corresponding to B-B line thereof.
Fig. 24 is a section of a modified example thereof, taken along a portion corresponding to B-B line in Fig. 18.
Fig. 25 is an exploded perspective view showing the structure of a seat cover in accordance with a fifth embodiment of the present invention.
Fig. 26 is a cross-sectional view of the seat cover thereof that is in a joined state, in which (A) is a section taken along a portion corresponding to A-A line of Fig. 18, while (B) a section taken along a portion corresponding to B-B line thereof.
Fig. 27 is a fragmentary longitudinal cross-section thereof.
Fig. 28 is a perspective view showing a modified example thereof.
Fig. 29 is a perspective view showing a seat cover in accordance with a sixth embodiment of the present invention, in which (A) illustrates the seat cover in an attached state while (B) a vehicle seat.
Fig. 30 is a plan view of the seat cover thereof that is in an attached state.
Fig. 31 is a side view of the seat cover thereof that is in an attached state.
Fig. 32 is a bottom view of the seat cover thereof that is in an attached state, with the illustration of the vehicle seat being omitted.
Fig. 33 is a section of the vehicle seat thereof.
Fig. 34 is a section of a principal portion of the seat cover thereof.
Fig. 35 is a section of the principal portion of the seat cover thereof that is in an attached state.
Fig. 36 is a perspective view showing a seat cover that is in an attached state in accordance with a seventh embodiment of the present invention.
Fig. 37 is a bottom plan view of the seat cover thereof that is in an attached state with the illustration of the vehicle seat being omitted.
Fig. 38 is a perspective view showing a seat cover that is in an attached state in accordance with an eighth embodiment of the present invention.
Fig. 39 is a section showing the neighborhood of an edge of a distortion-preventive member thereof.
Fig. 40 is a perspective view showing a seat cover that is in an attached state in accordance with a ninth embodiment of the present invention.
Fig. 41 is a side view of the seat cover thereof that is in an attached state.
Fig. 42 is a perspective view showing a seat cover that is in an attached state in accordance with a tenth embodiment of the present invention.
Fig. 43 is a bottom plan view of the seat cover thereof that is in an attached state with the illustration of the vehicle seat being omitted.
Fig. 44 is a perspective view of the seat cover thereof that is in an attached state, using a distortion-preventive member having a circular cross-section.
Fig. 45 is a side view showing a seat cover that is in an attached state in accordance with an eleventh embodiment of the present invention.
Fig. 46 is a perspective view showing a seat cover that is in an attached state in accordance with a twelfth embodiment of the present invention.
Fig. 47 is a perspective view showing a thirteenth embodiment of the present invention, in which (A) shows a seat cover that is in an attached state, while (B) the vehicle seat.
Fig. 48 is a section of a principal portion of a seat cover in accordance with a fourteenth embodiment of the present invention.
Fig. 49 is a section of a cover main body thereof, in which (A) illustrates an airtight sheet being attached to a rear side thereof, while (B) the airtight sheet being attached to a front side thereof.
Fig. 50 is a partly enlarged section of a cover main body in accordance with a fifteenth embodiment of the present invention.
Fig. 51 is an explanatory perspective view of the vehicle seat for explaining the attachment of a seat cover thereto in accordance with a sixteenth embodiment of the present invention.

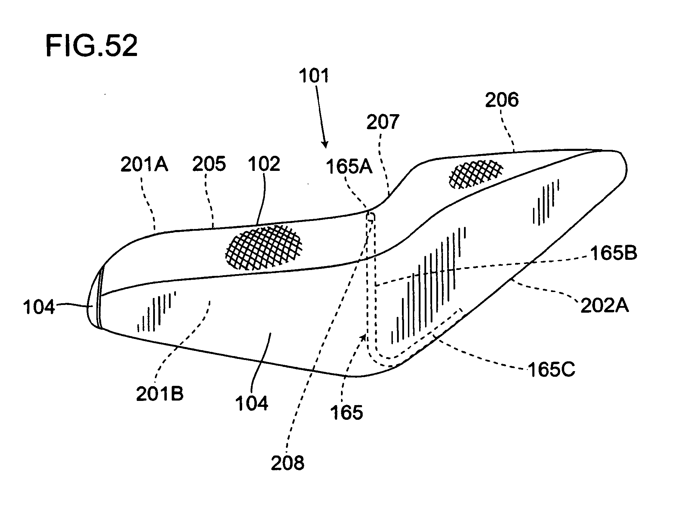

Fig. 52 is a side view of the seat cover thereof that is in an attached state.
Fig. 53 is a perspective view showing a seat cover that is in an attached state in accordance with a seventeenth embodiment of the present invention.
Fig. 54 is a bottom plan view of the seat cover thereof that is in an attached state with the illustration of the vehicle seat being omitted.
Fig. 55 is a perspective view showing a seat cover that is in an attached state in accordance with an eighteenth embodiment of the present invention, illustrating the seat cover prior to connecting a distortion-preventive member thereto.
Fig. 56 is a section of a principal portion of a seat cover that is in an attached state in accordance with a nineteenth embodiment of the present invention.
Fig. 57 is a section of a principal portion of a seat cover that is in an attached state in accordance with a twentieth embodiment of the present invention.
Fig. 58 is a section of a principal portion of a seat cover that is in an attached state in accordance with a twenty-first embodiment of the present invention.
Fig. 59 is a section of a principal portion of a seat cover that is in an attached state in accordance with a twenty-second embodiment of the present invention.
Fig. 60 is a section of a principal portion of a seat cover that is in an attached state in accordance with a twenty-third embodiment of the present invention.
Fig. 61 is a section of a principal portion of a seat cover that is in an attached state in accordance with a twenty-fourth embodiment of the present invention.
Fig. 62 is a section of a principal portion of a seat cover that is in an attached state in accordance with a twenty-fifth embodiment of the present invention.
Fig. 63 shows a seat cover in accordance with a twenty-sixth embodiment of the present invention, in which (A) is a plan view showing the seat cover that is in an attached state, while (B) is a bottom plan view showing the seat cover that is in an attached state with the illustration of the vehicle seat being omitted.
Fig. 64 is an explanatory plan view of a principal portion of a cover main body in accordance with a twenty-seventh embodiment of the present invention.
Fig. 65 is a perspective view showing a principal portion of the vehicle with a seat cover in accordance with a twenty-eighth embodiment of the present invention.
Fig. 66 is a perspective view showing the principal portion of the vehicle thereof with the vehicle seat being opened.
Fig. 67 is a section of the principal portion thereof with the vehicle seat being closed.
Fig. 68 is a section of a principal portion of a seat cover with the vehicle seat being closed in accordance with a twenty-ninth embodiment of the present invention.
Fig. 69 is a section of a principal portion of a seat cover in accordance with a thirtieth embodiment of the present invention.
Fig. 70 is a section of a principal portion of a seat cover in accordance with a thirty-first embodiment of the present invention.
Fig. 71 is a section of a principal portion of a seat cover in accordance with a thirty-second embodiment of the present invention.
Fig. 72 is a section of a principal portion of a seat cover in accordance with a thirty-third embodiment of the present invention.
Fig. 73 illustrates sections of a principal portion of a seat cover in accordance with a thirty-fourth embodiment of the present invention.
Fig. 74 is a section of a principal portion of a seat cover in accordance with a thirty-fifth embodiment of the present invention.
Fig. 75 is a section of a principal portion of a seat cover in accordance with a thirty-sixth embodiment of the present invention.
Fig. 76 is a section of a principal portion of a seat cover in accordance with a thirty-seventh embodiment of the present invention.
Fig. 77 is a section of a principal portion of a seat cover in accordance with a thirty-eighth embodiment of the present invention.
Fig. 78 is a section of a principal portion of a seat cover in accordance with a thirty-ninth embodiment of the present invention.

Next is a description of preferred embodiments of the present invention with reference to the attached drawings.

### First embodiment

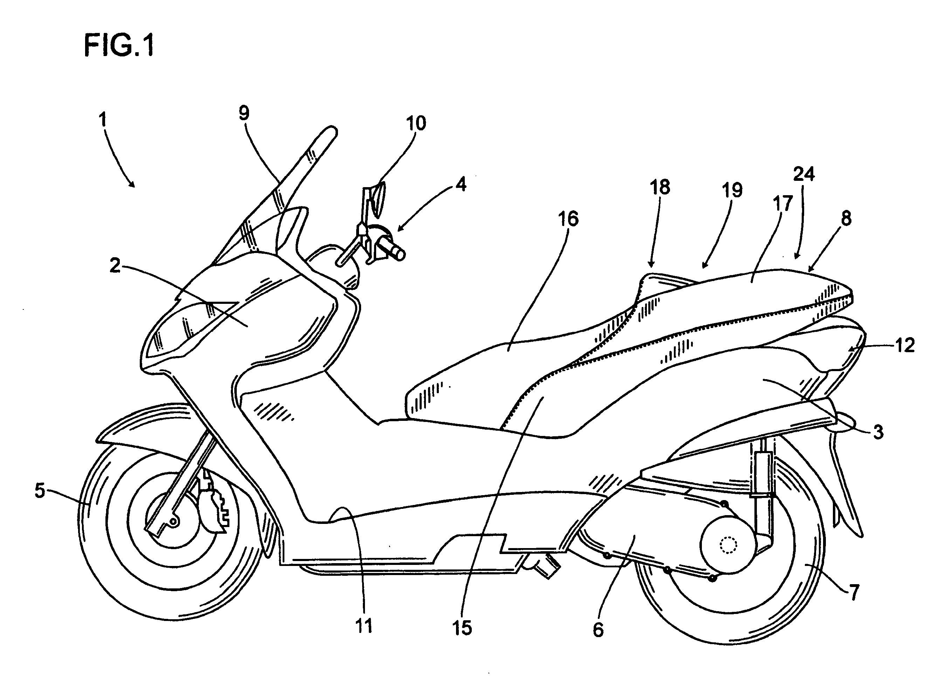

A saddle-type vehicle 1 (hereinafter simply called "vehicle 1") shown in Fig. 1 comprises a vehicle frame (not shown), a front cover 2, a rear cover 3, a handle 4, a front wheel 5, a power unit 6, a rear wheel 7 and a seat 8, constituted so that a driver sitting on the seat 8 can steer the handle 4. In the meantime, in the following explanation, "the traveling direction of vehicle" is expressed by the wording: "a front side of the vehicle" or "anteriorly to the vehicle", or simply "front ", or "forward".

That is, the vehicle frame (not shown) is covered with the front cover 2 and the rear cover 3. The front wheel 5 steered by the handle 4 is provided anteriorly to the vehicle frame (not shown). The power unit 6 supported rockably in a vertical direction is provided substantially in the middle position thereof. The rear wheel 7 is integrally fitted to an output shaft of the power unit 6. In the front cover 2, there is provided a windshield 9 acting as a wind shelter for a driver sitting on the seat 8. Further, in the handle 4, there is provided a pair of side mirrors 10 protruding to a lateral side face of the vehicle 1. Above the power unit 6, the seat 8 is fitted to a seat frame (not shown) fixed to the vehicle frame (not shown).

Between a reverse side of the front cover 2 and the seat 8 is provided a pair of footrests 11 that are arranged at right and left sides with respect to a traveling direction, for the driver sitting on the driver seat 8 to put their feet thereon. Further, a lamp unit 12 comprising a tail lamp, a winker lamp and the like is fitted into a rear end of the rear cover 3.

The seat 8 comprises a lateral side face 15, a driver's seat (hereinafter simply called "driver seat") 16, and a fellow passenger's seat (hereinafter simply called "passenger seat") 17 which are provided above the lateral side face 15. Thus, the seat 8 is a tandem-type seat made up by arranging tandem the driver seat 16 and the passenger seat 17 in an anteroposterior direction of the vehicle 1. A seat cover 19 equipped with a support 18 is attached to the seat 8 so that the support 18 can support a rump of a driver sitting on the driver seat 16 as a whole.

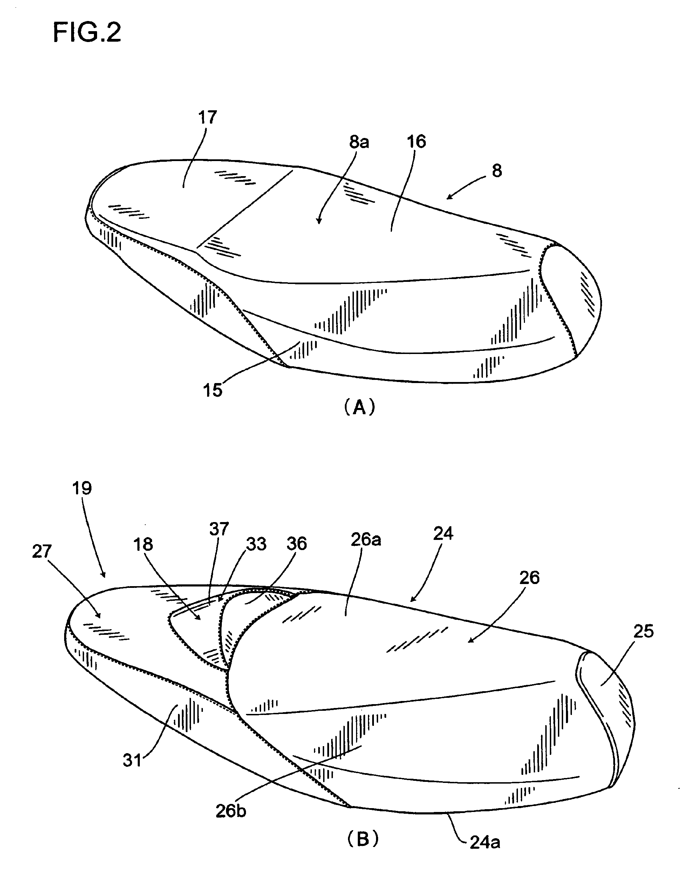

As shown in FIG. 2, an upper surface of the seat 8 is formed with a substantially flat seating face 8a. The seat cover 19 for covering the seat 8 includes a cover main body 24 for covering the seating face 8a and lateral side face 15 of the seat 8 and the support 18 for supporting the rump of the driver sitting on the driver seat 16. This seat cover 19 is attached to the seat 8 to cover the seat 8, thereby forming the support 18 on the seat 8 of which the seating face 8a is nearly flat.

The cover main body 24 is composed of a sheet-like member and includes an anterior portion 25, a driver's portion (hereinafter simply called "driver portion") 26 and a fellow passenger's portion (hereinafter simply called "passenger portion") 27. The driver portion 26 is composed of a three-dimensional textile and comprises a driver's seating face 26a and a driver's lateral side face 26b which are integrated together and is formed with an opening end 24a in its underside.

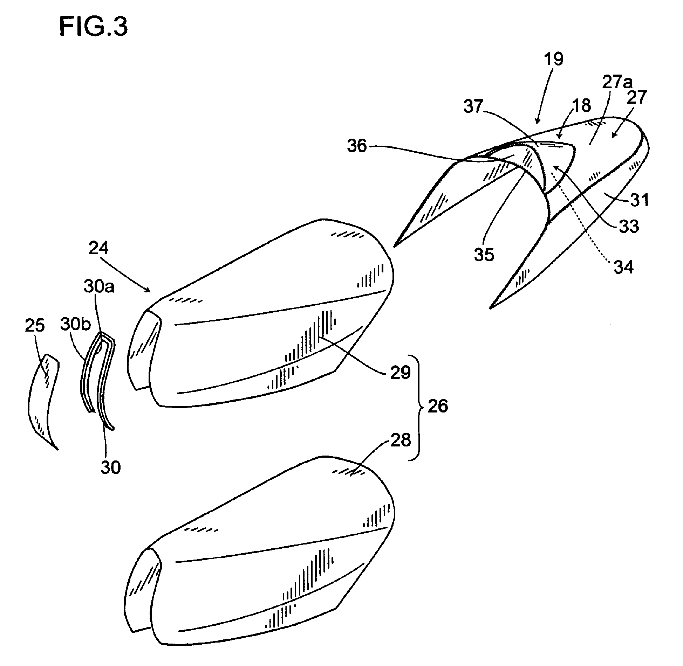

As shown in FIG. 3, the cover main body 24 is constituted such that the anterior portion 25, the driver portion 26 and the passenger portion 27 are joined together in each peripheral edge by sewing.

The driver portion 26 comprises an inside member 28 and an outside member 29. The inside member 28 is composed of a three-dimensional textile that is meshed more largely than the three-dimensional textile making up the outside member 29. At a distal end of the driver portion 26, the driver portion 26 is sewed to the anterior portion 25 with a pipe-shaped member 30 being sandwiched therebetween. This pipe-shaped member 30 is made of synthetic resin and is a flexible long member in which a cylindrical bead and reel portion 30b is molded integrally with one end of a tabular attachment side 30a.

Here, the three-dimensional textile is a three-dimensional textile fabric produced by using Double Lassen Weave, having a certain thickness of a three-dimensional knitted stitch structure made of plastic fiber or the like. Though not shown, in the three-dimensional textile, an obverse-side layer and a reverse-side layer that exhibit meshed patterns are arranged in its thickness direction at intervals to be coupled by a connecting fiber in the thickness direction, thereby providing an appropriate level of cushioning performance by its elasticity of the connecting fiber. The obverse-side layer and the reverse-side layer are formed with the meshed patterns of polygons, e.g., rhombus. The thickness of the three-dimensional textile is in the order of about 10 mm, while even if the thickness is in the order of 5 to 20 mm, yet good cushioning performance and air permeability can be obtained. In the meantime, as a three-dimensional textile, "FUSHION-1" (trademark) made by Asahi Kasei Corporation is exemplified.

The anterior portion 25 and the passenger portion 27 are composed of a comparatively hard material as compared to that of the driver portion 26, e.g., synthetic leather, and formed to a length enabling them to wrap around a bottom of the seat 8. This passenger portion 27 includes a passenger seating face 27a and a rear lateral side face 31 and is formed so as to cover the seating face 8a of the passenger seat 17 and the lateral side face 15 behind the seat 8. The passenger seating face 27a is formed with the support 18 at the joint with the driver portion 26. This passenger portion 27 is so structured that it can support the support 18 formed in the passenger seating face 27a.

The support 18 is located at a central portion of the joint with the driver portion 26 with respect to the width direction thereof, and is provided at one surface side of the cover main body 24 in a protruding manner. Specifically, the support 18 includes a covering member 33, a filling member 34 and a lid member 35 and has a nearly triangular shape in plane view, while the support 18 is arranged so that its base of the nearly triangular shape faces the anterior portion of the vehicle 1. Besides, the support 18 is formed in a nearly crescent shape, seen from the anterior portion of the vehicle 1.

The covering member 33 is composed of a sheet-like member and includes a supporting surface 36 and a covering surface 37, and is formed so as to allow the filling member 34 to be housed therein. The supporting surface 36 is formed so as to have a concave curved surface of which the central portion gradually gets more concave to the backside of the vehicle 1. According to the present embodiment, the concave curved surface of the supporting surface 36 is parabolic in shape.

Further, the supporting surface 36 is formed of a nearly crescent shape seen from the anterior portion of the vehicle 1, and the curved surface exhibiting a concave shape relative to the front side is fitted onto the rear end of the driver portion 26 so as to conform thereto. The covering surface 37 is composed of the synthetic leather, and has a top end defined by the upper end of the supporting surface 36 that is vertically provided on the driver portion 26. Then, the covering surface 37 slopes moderately backward to a surface of the passenger portion 27. The support 18 thus structured is located so that the supporting surface 36 faces the driver portion 26.

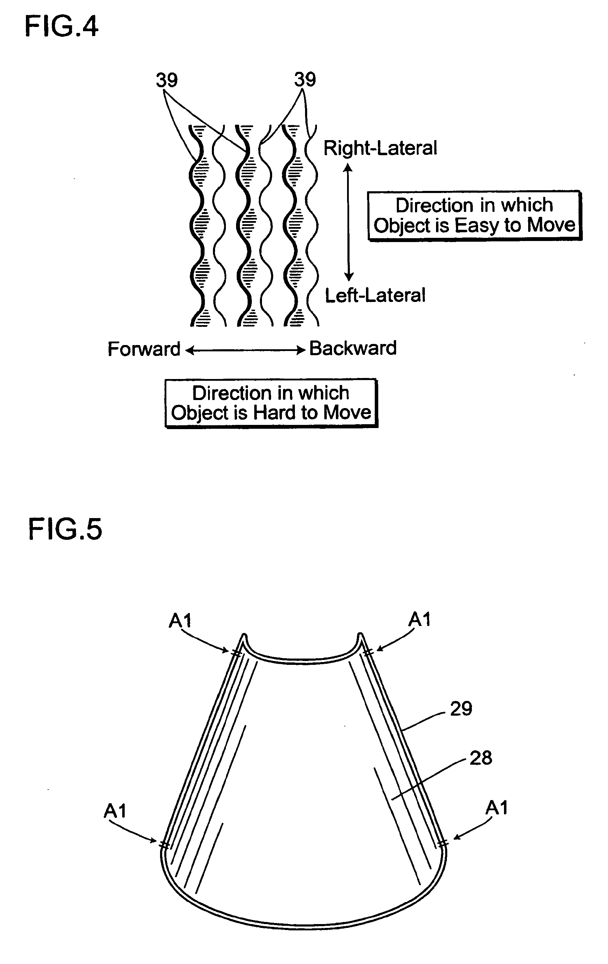

The outside member 29 of the driver portion 26 is formed, as shown in Fig. 4, such that a direction in the mesh that will cause more friction in moving an object is parallel with the anteroposterior direction of the vehicle 1. In other words, the outside member 29 is formed such that a direction perpendicular to a plurality of thread 39 making up the three-dimensional textile is parallel with the anteroposterior direction of the vehicle 1.

The outside member 29 thus structured is, as shown in FIG. 5, sewed to the inside member 28 of a similar figure at multiple points, e.g., four points (A1 in FIG. 5) according to the present embodiment, to thereby be integrated with the inside member 28.

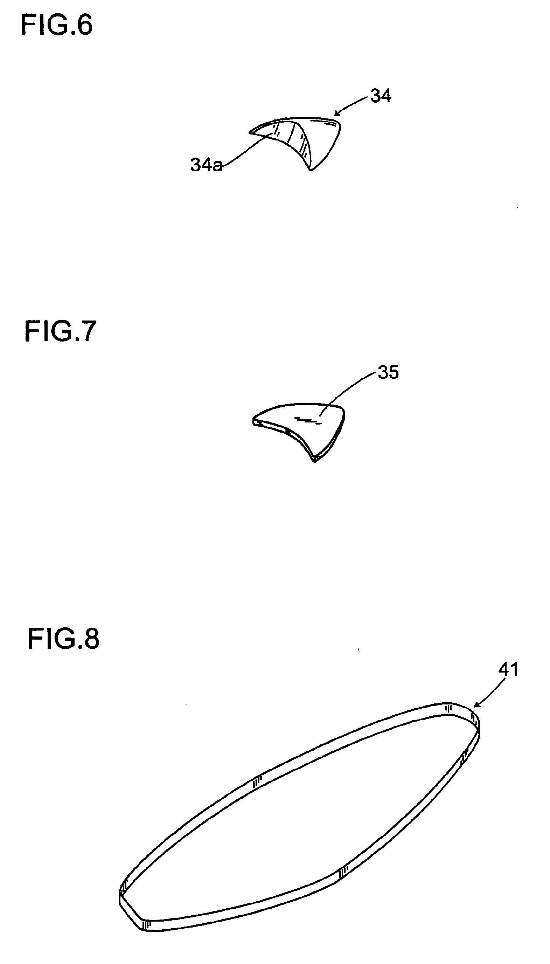

The filling member 34 is, as shown in FIG. 6, is composed of a cushion member, as is the case with the seat 8, such as urethane or the like, and is formed so as to be capable of being housed in an interior space formed by the covering member 33.

Specifically, the filling member 34 is formed of a nearly triangular shape in plain view and further is formed of a nearly crescent shape when seen from the anterior portion of the vehicle 1. The filling member 34 includes a supporting surface 34a which supports the supporting surface 36 of the covering member 33 from within. The supporting surface 34a is formed in a parabolic shape such that the central portion of the supporting surface 34a becomes more concave gradually toward the backside of the vehicle 1 in a similar fashion to the case with the supporting surface 36.

As shown in FIG. 7, the lid member 35 is composed of the synthetic leather of the same one as used for the passenger portion 27 and is formed of a nearly triangular sheet-like member capable of closing an interior space (described later) formed on the other surface side of the covering member 33.

The cover main body 24 thus structured is provided, at its opening end 24a, with an annular flexible member 41 (shown in FIG. 8) made of rubber, to thereby permit the lateral side face 15 of the seat 8 to be tightened by the annular flexible member 24a.

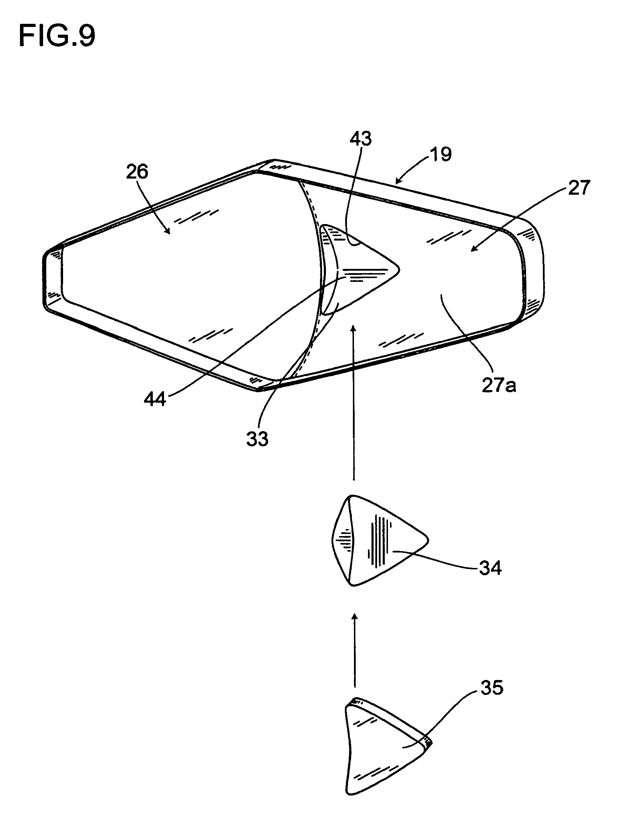

As shown in FIG. 9, the passenger seating face 27a is partly cut off in a nearly triangular shape in the joint portion with the driver potion 26 so as to form an opening 43. At one side of the opening 43, the covering member 33 is provided to form the interior space 44. Then, from the other side of the cover main body 24, the filling member 34 is inserted into the interior space 44 defined by the opening 43 thus formed in the passenger portion 27 and the covering member 33 provided at one side of the opening 43.

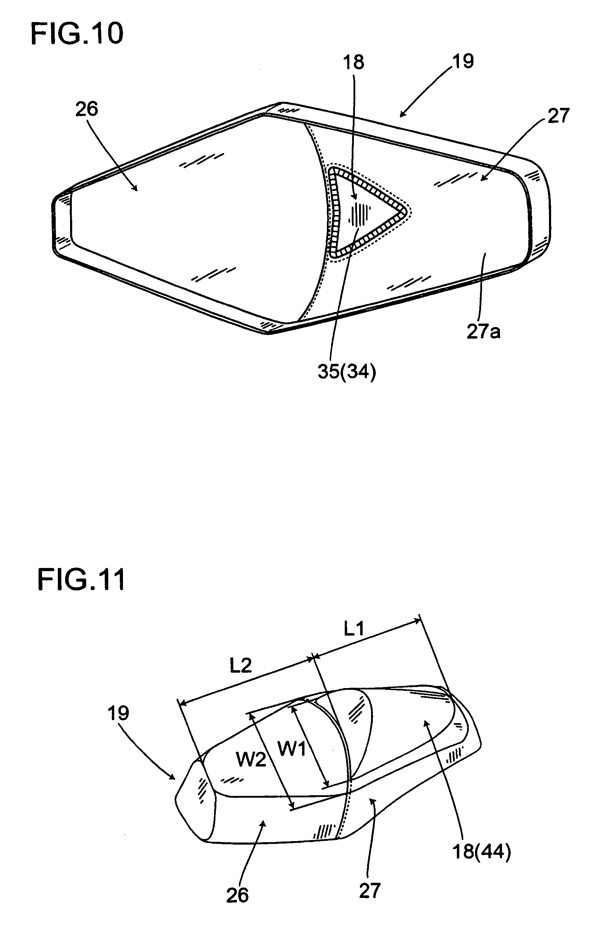

The opening 43 with the filling member 34 inserted thereinto is closed with the lid member 35. Here, the peripheral edge of the lid member 35 and the opening 43 are sewed together and thus the lid member 35 is fixed to the cover main body 24 (as shown in FIG. 10). Thus, the support 18 is structured so as to be able to retain a given shape by providing the filling member 34 in the interior space 44.

Now, a modified example of the support 18 is described with reference to FIG. 11. The support 18 shown in FIG. 11 is desirably formed such that a length L1 of the support 18 in the anteroposterior direction of the vehicle 1 becomes shorter than a length L2 of the driver portion 26 in the anteroposterior direction of the vehicle 1.

Further, the support 18 may be formed such that a length W1 thereof in the width direction of the vehicle 1 becomes somewhat shorter than a length W2 of the seat 8 in the width direction of the seat. In other words, the support 18 may be formed so as to occupy nearly the whole area of the passenger portion 27 in a plane view. By forming the support 18 so as to occupy nearly the whole area of the passenger portion 27 in this manner, the interior space 44 of the support 18 can be enlarged in the seat cover 19.

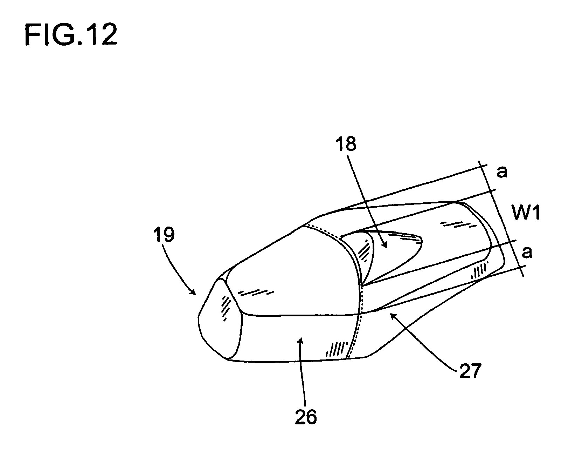

As shown in FIG. 12 showing the first embodiment, the support 18 is formed such that the length W1 thereof in the width direction of the vehicle 1 is longer than 2a that is the sum of two lengths "a" each being defined by a clearance between a lateral side edge of the seat 8 and an adjacent edge of the support 18 in the width direction of the vehicle 1. In this case, the support 18 can be downsized in the seat cover 19, and hence even if the support 18 is provided, a fellow passenger is allowed to get on the passenger portion 27.

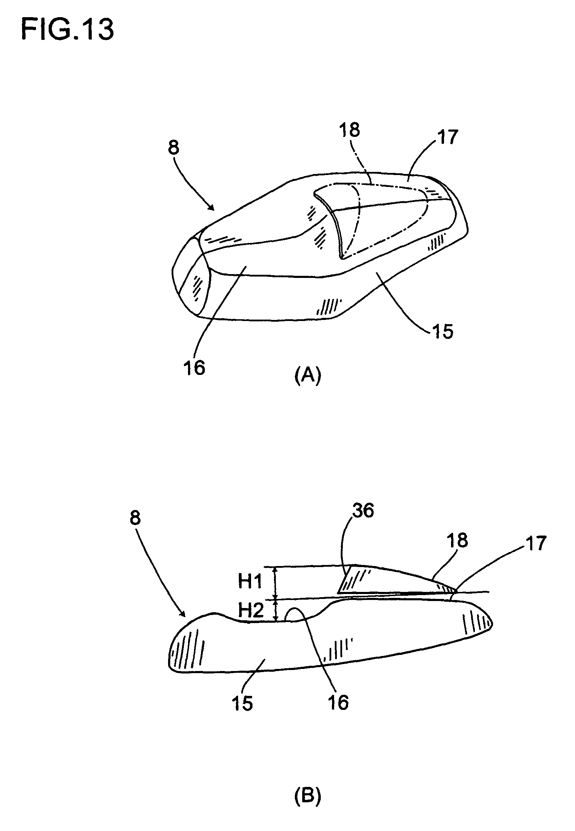

Furthermore, another modified example of the support 18 is described with reference to FIG. 13. The support 18 shown in FIG. 13 is preferably formed in accordance with a bump formed between the driver seat 16 and the passenger seat 17. In other words, the seat 8 is formed with the bump between the driver seat 16 and the passenger seat 17 by locating the passenger seat 17 higher than the driver seat 16. Accordingly, the support 18 is preferably formed at one surface side of the cover main body 24 where a lower end of the supporting surface 36 of the support 18 conforms to the uppermost portion of the bump. Besides, in this case, the support 18 is preferably formed such that a length H1 of the supporting surface 36 in the vertical direction is longer than a length H2 of the bump in the vertical direction between the driver seat 16 and the passenger seat 17.

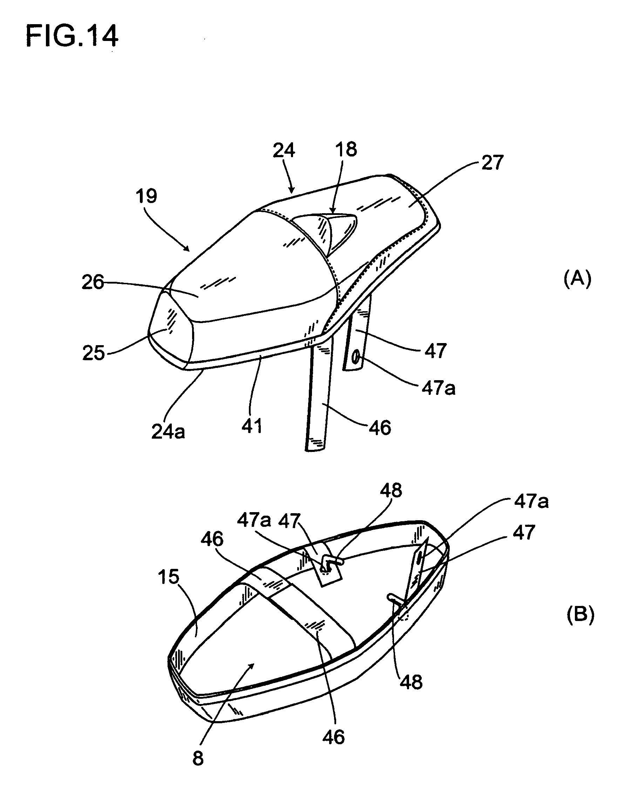

Next, a description of attaching the seat cover 19 to the seat 8 is given with reference to FIG. 14. First, the seat cover 19 is placed on the seating face 8a of the seat 8 from a side of the opening 24a to cover the same. The seat cover 19 is provided with the annular flexible member 41 in the opening 24a. The flexible member 41 tightens the lateral side face 15 of the seat 8 to thereby fix the seat cover 19 to the seat 8. On a different note, the seat cover 19 is composed of comparatively hard raw material in its anterior portion 25 and its passenger portion 27 that are portions abutting against the lateral side face 15 of the seat 8. As a result, when the flexible member 41 tightens the lateral side face 15, the cover main body 24 can be restrained from being deformed.

Further, a pair of zonal adhesive members 46 is provided in the opening end 24a of the seat cover 19 to allow the adhesive members 46 to adhere to each other at the bottom side of the seat 8, so that the lateral side face 15 of the seat 8 is tightened.

Furthermore, the seat cover 19 is provided with a locking piece 47 in the opening end 24a while a locking hole 47a is cut in the locking piece 47. As a result, the seat cover 19 can be fixed to the seat 8 by locking the locking hole 47a of the locking piece 47 in a locking portion 48 formed at the bottom of the seat 8.

Next is a description on behavior and effects of the seat cover 19 so structured as described above. First, the seat cover 19 equipped with the support 18 is already placed on the seat 8 by the procedures described above (shown in FIG. 1).

A driver sits on the driver seat 16 of the seat 8 and then holds the handle 4 to be able to steer the vehicle 1. During the traveling of the vehicle 1, the seat 8 will support a body weight of the driver who sits on the driver seat 16. Incidentally, according to the conventional seat 8, there is a slight bump between the driver seat 16 and the passenger seat 17. The conventional seat 8, however, is nearly flat as a whole though there is a slight bump between the driver seat 16 and the passenger seat 17. Accordingly, a driver sitting on the seat 8 is supported from backside only by such slight bump in his/her rump portion.

According to the present embodiment, the seat cover 19 provided with the support 18 is attached to the seat 8. As a result, the seat cover 19 supports the driver's rump from backside by the support 18 and hence a feeling of being "well-supported" can be given to the driver. Besides, according to the present embodiment, the height of the support 18, i.e., H1 of the supporting surface 36 is formed higher than the H2 of the bump and therefore a larger area can serve to support the rump of the driver.

Moreover, according to the present embodiment, the cover main body 24 is detachably provided in the seat 8, while the support 18 is arranged on an upper surface of the cover main body 24 and at the central portion with respect to the width direction thereof. As a result, without refashioning the seat 8, the seat 8 can be easily changed into a seat 8 with a support for supporting the rump. Besides, since the seat cover 19 can be easily detached, a common tandem type seat 8 on which two persons can ride can be obtained only by detaching the seat cover 19.

Still further, according to the present embodiment, the support 18 is formed such that the width thereof is made shorter than the width of the seat 8 and includes the supporting surface 36 at the front side of the vehicle 1. The supporting surface 36 is formed of a crescent shape and in a parabolic shape. As a result, the support 18 can be fitted to the rump of the driver.

Furthermore, according to the present embodiment, the cover main body 24 includes the anterior portion 25, the driver portion 26, the passenger portion 27 and the rear lateral side face 31. Then, the anterior portion 25, the driver portion 26, the passenger portion 27 and the rear lateral side face 31 are integrally formed with one another. In the cover main body 24, the anterior portion 25 and the rear lateral side face 31 are formed from a comparatively hard raw material and also are formed long enough to wrap around to the bottom of the seat 8. Further, the cover main body 24 can be attached to the seat 8 with tension being applied in the anteroposterior direction of the vehicle 1. Accordingly, the support 18 can be prevented from being displaced in use and therefore stable use of support 18 can be promised.

Moreover, according to the present embodiment, the driver portion 26 is formed from the three-dimensional textile. Hence, a great deal of air is allowed to flow through the seating face 8a, so that the temperature on the seat 8 in summer can be lowered.

In the cover main body 24, the anterior portion 25 and the rear lateral side face 31 are formed from a comparatively hard raw material and besides is formed long enough to wrap around up to the bottom of the seat 8, thus permitting positional displacement during riding to be prevented. Further, the three-dimensional textile which makes up the driver portion 26 of the cover main body 24 is formed so that its direction hard to be displaced is allowed to be parallel with a traveling direction of the vehicle 1.

Further, the seat cover 19 is provided with the annular flexible member 41 in the opening end 24a and the cover main body 24 is fixed to the seat 8 so as to tighten the rear lateral side face 15 of the vehicle 1. Hence, the cover main body 24 can be infallibly restrained from being displaced in use. Furthermore, the seat cover 19 is provided with the adhesive members 46 and the locking pieces 47 in the opening end 24a to fix the cover main body 24 to the seat 8 so as to tighten the lateral side face 15 of the seat 8. Hence, the seat cover 19 can be infallibly restrained from being displaced in use.

In the meantime, when the seat cover 19 is detached from the seat 8, the seat 8 is detached from the vehicle 1, and then the adhesive members 46 and the locking pieces 47 are disengaged from each other at the bottom side, and then by pulling the seat cover 19 up to an upper surface side of the seat 8, the seat cover 19 can be easily detached.

By detaching the seat cover 19 from the seat 8 in this way, the seat 8 can be converted into a common tandem type seat 8 on which two persons can ride.

In addition, the seat cover 19 is, as described above, composed of the three-dimensional textile and the synthetic leather. Hence, when detached, the seat cover 19 can be folded in a small size, permitting the seat cover 19 to be easily stored in a storage portion (not shown) provided under the seat 8 of the vehicle 1.

### Second embodiment

Next, a second embodiment of the present invention will be explained with reference to the attached drawings. The second embodiment differs from the first embodiment only in the structure of the above-mentioned support. In the meantime, the same portions as those described in the first embodiment are designated by the same reference numerals, and the duplicate description thereof will be omitted for the sake of simplicity.

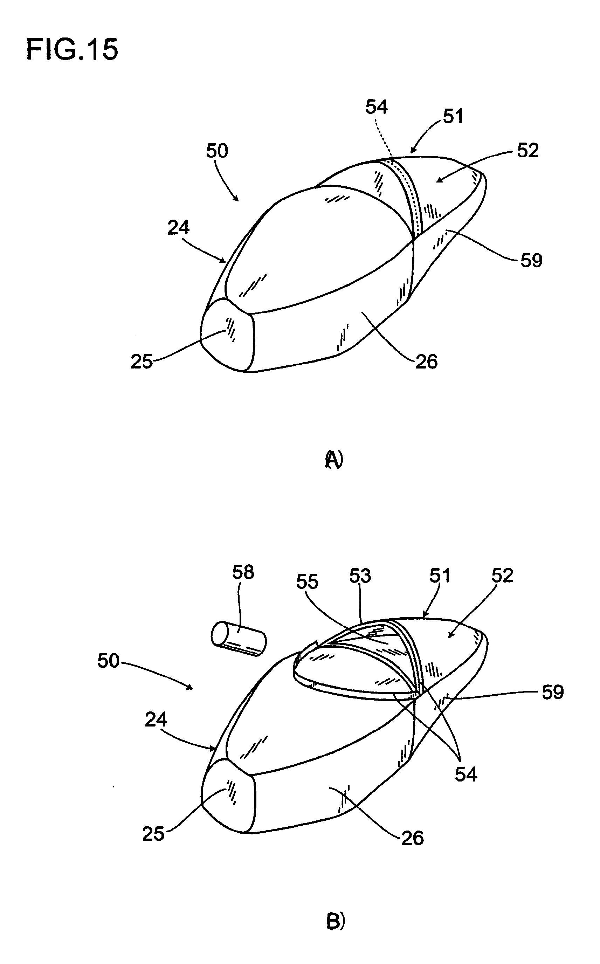

A seat cover 50 shown in Fig. 15 comprises a cover main body 24 and a support 51. Here, the cover main body 24 comprises the anterior portion art 25, the driver portion 26 and a posterior portion 59, which are integrated with one another by sewing.

Here, the support 51 is provided on a front end of the posterior portion 59 serving as a joint with the driver portion 26, and in the center of the cover main body 24 with respect to the width direction of the cover main body 24. The support 51 is designed so as to be able to support a rump of the driver and store some pieces of baggage therein.

Specifically, the support 51 comprises a covering member 52 and a frame member 53, and is formed such that it has a substantially triangular shape in a plan view as well as a substantially crescent shape, in a front view as viewed from the front side of the vehicle 1. The covering member 52 comprises the supporting face 36 and the covering face 37. The supporting face 36 is fixed to the lower end of an outlet opening 55 formed between the covering face 37 and the upper surface of the posterior portion 59 in a manner capable of opening and closing the outlet opening 55.

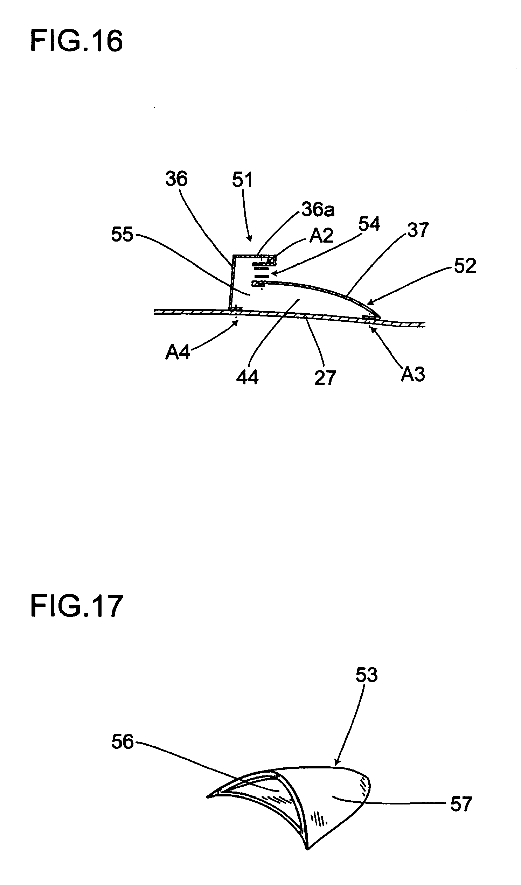

As shown in Fig. 16, the upper end of the supporting face 36 is detachably engaged with the inner edge of the outlet opening 55 by a fastener 54. Specifically, the supporting face 36 covers the outer edge of the covering face 37 with a folded portion 36a thereof formed by turning an upper end thereof toward the rear side of the vehicle 1, while the aforesaid fastener 54 is provided between the folded portion 36a and the outer edge of the covering face 37. The fastener 54 is sewed to the folded portion 36a and the covering face 37 in a sewing area A2, respectively.

As shown in Fig. 17, the frame member 53, made of rigid plastic, comprises a frame opening 56 formed through one face and a storage body 57 communicating with said frame opening 56. This frame member 53 is formed so as to have a contour similar in shape to an interior space 44 defined by the covering member 52.

The seat cover 50 is constituted such that the covering member 52 is attached by sewing in the sewing area A3 on the surface of the posterior portion 59, while the outlet opening 55 is formed on the front side, and the interior space 44 is formed between the covering member 52 and the surface of the posterior portion 59, as shown in Fig. 16. The support 51 can be retained in a predetermined shape by inserting the frame member 53 into the interior space 44 through the outlet opening 55. Moreover, the outlet opening 55 is made openable and closable by the supporting face 36 sewed in the sewing area A4 at the lower end thereof. In this way, the support 51 is allowed to have the frame member 53 included in the interior space 44 and the outlet opening 55 made closable by the supporting face 36, thus enabling the rump of the driver sitting on the driver seat 16 to be supported while retaining the stored baggage 58.

In the meantime, whilst the upper end of the supporting face 36 and the inner edge of the outlet opening 55 are detachably engaged with each other according to the present embodiment, the present invention is not to be limited thereto, but they may be engaged with each other using a hook and loop fastener.

### Third embodiment

Next, the third embodiment of the present invention will be explained with reference to the attached drawings. The third embodiment differs in structure of the cover main body from the first embodiment. In the meantime, the same portions as those described in the first embodiment are designated by the same reference numerals, and the duplicate description thereof will be omitted for the sake of simplicity.

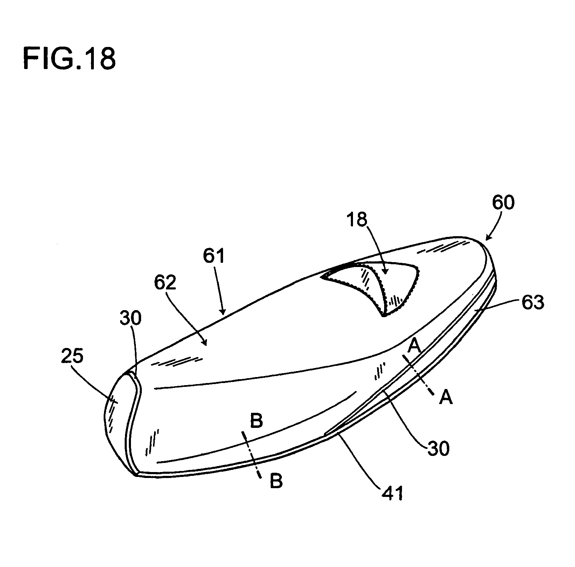

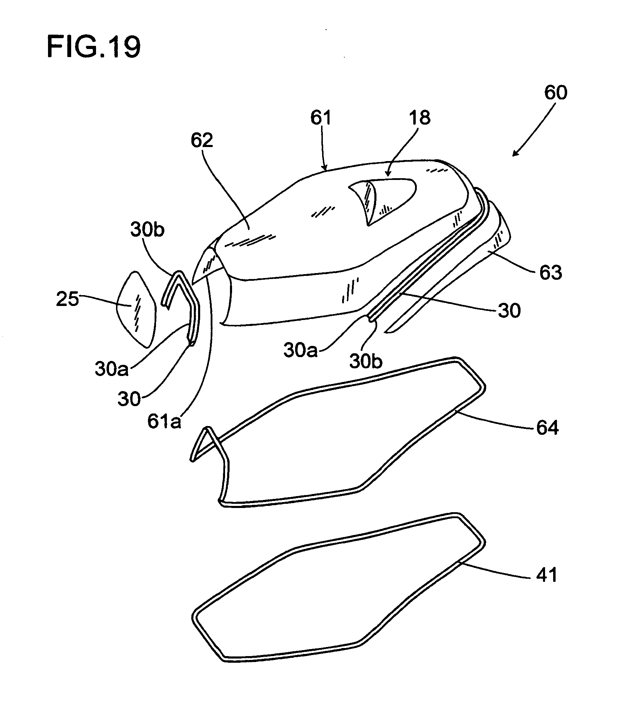

A seat cover 60 shown in Fig. 18 comprises a cover main body 61 and the support 18. The cover main body 61 comprises the anterior portion 25, a seating portion 62 and a posterior side portion 63, which are sewed integrally with one another together with the pipe-shaped member 30 and a taping member 64 to thereby cover the seating surface 8a and side surface 15 of the seat 8. The flexible member 41 is provided in an opening edge 61a of the cover main body 61. The seating portion 62 has a single layer structure made up of a comparatively large-meshed three-dimensional textile, as shown in Fig. 19. The anterior portion 25 and the posterior side portion 63 are made of synthetic leather.

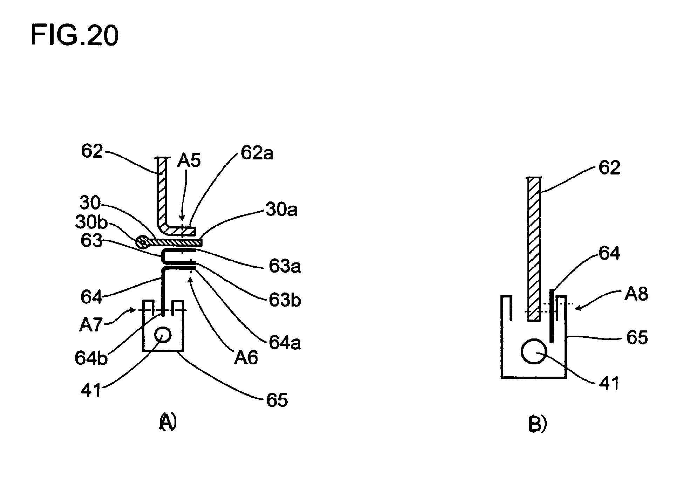

As shown in Fig. 20 (A) showing a section taken along A-A line in Fig. 18, the seating portion 62 and the posterior side portion 63 are joined to each other by sewing, using the pipe-shaped member 30. In other words, the seating portion 62 and the posterior side portion 63 are sewed to each other in a sewing area A5 on the rear side by turning back the respective ends to form the folded portions 62a, 63a, respectively, and sandwiching an attachment side 30a therebetween. Thus, a joined area between the seating portion 62 and the posterior side portion 63 is protected by the pipe-shaped member 30, while enabling the improvement in aesthetic property of the external appearance thereof.

Likewise, the posterior side portion 63 and the taping member 64 are joined to each other by folding the respective ends to form folded portions 63b, 64a, respectively, and sewing them in a sewing area A6. Further, the other end 64b of the taping member 64 is sewed to a covering member 65 containing the flexible member 41 in a sewing area A7. In this way, the seating portion 62, the posterior side portion 63 and the flexible member 41 are integrated with one another.

Similarly, as shown in Fig. 20 (B), the seating portion 62 has one end inserted into the covering member 65 on a front side and sewed together with the taping member 64 in a sewing area A8, with the flexible member 41 being provided in the opening end 24a.

The cover main body 61 constituted in this way can achieve the same effect as the foregoing embodiments due to the provision of the support 18.

Moreover, since the seating portion 62 is constituted such that the driver portion 26 and the passenger portion 27 are integrated with each other by the three-dimensional textile, the front-to-rear airflow is allowed to pass from the driver portion 26 to the passenger portion 27 below the seating portion 62. As a result, the seat cover 60 according to the present embodiment can improve air permeability due to the structure that allows air to flow through below the seating portion 62 easily. Further, since the three-dimensional textile that makes up the seating portion 62 is made of the large-meshed three-dimensional textile, further improved air permeability is achieved, thus giving pleasant cooling sensation to the riders on the vehicle 1. Moreover, dusts or the like bonding to the surface of the seat cover 60 can be easily slapped away due to the three-dimensional textile being large-meshed.

Although the seating portion 62, the anterior portion 25, the seating portion 62 and the posterior side portion 63 are joined together by sewing through the pipe-shaped member 30 in the third embodiment, they may be joined together without through the pipe-shaped member 30.

### Fourth embodiment

Next, a fourth embodiment of the present invention will be explained with reference to the attached drawings. The overall structure of the fourth embodiment is the same as the foregoing third embodiment shown in Fig. 18 except the structure of its seating portion. In the meantime, the same structural components as those of the third embodiment are designated by the same reference numerals, and the repeated descriptions thereof are omitted.

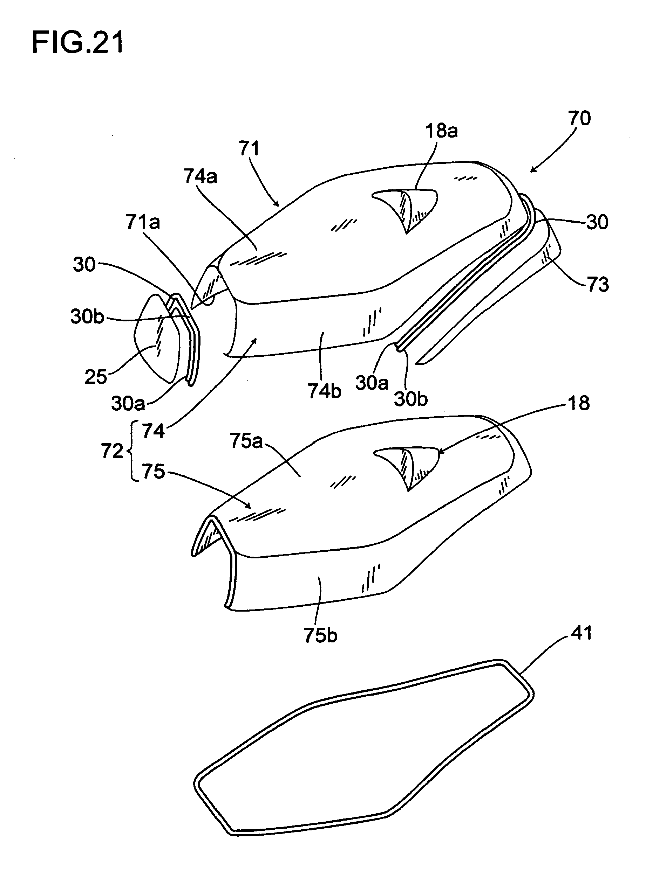

A seat cover 70 shown in Fig. 21 comprises: a cover main body 71; the support 18; and the flexible member 41 provided at an opening end 71a. The cover main body 71 comprises: the anterior portion 25; a seating portion 72; and a posterior side portion 73, which are integrated with one another together with the pipe-shaped member 30. The seating portion 72 has a two-layer structure, comprising an outside member 74 and an inside member 75. In these outside member 74 and inside member 75, seating faces 74a and 75a are formed integrally with seating side faces 74b and 75b, respectively. Moreover, the anterior portion 25 and the posterior side portion 73 are made of synthetic leather.

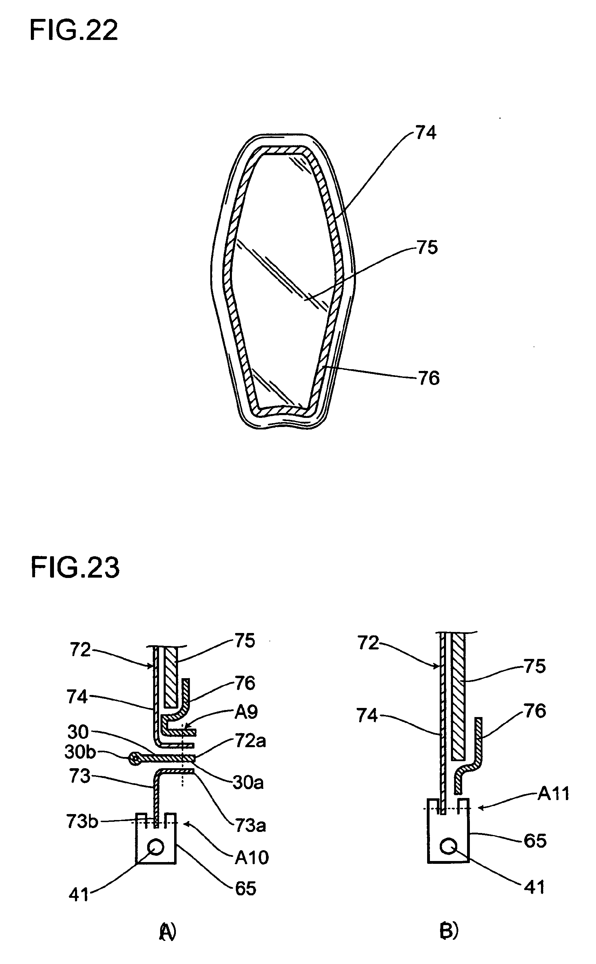

The inside member 75 is made of large-meshed three-dimensional textile, while the outside member 74 is made of small-meshed three-dimensional textile. The seating face 74a of the outside member 74 is formed with the space 18a for inserting the support 18 thereinto. The inside member 75 has a portion partly cutout, corresponding to the posterior side portion 73, while the support 18 is provided on the seating face 75a. This inside member 75 is formed slightly smaller than the outside member 74. An outer edge of this inside member 75 is, as shown in Fig. 22, allowed to adhere to one surface of the outside member 74 through an iron tape 76 or the like.

As shown in Fig. 23 (A) showing a section taken along a portion corresponding to that shown in Fig. 18, the seating portion 72 and the posterior side portion 73 are joined to each other by sewing, using the pipe-shaped member 30. In other words, the seating portion 72 and the posterior side portion 73 are sewed to each other in a sewing area A9 on the rear side by folding the respective ends to form folded portions 72a, 73a, respectively, and sandwiching the attachment side 30a therebetween.

The other end 73b of the posterior side portion 73 is sewed to the covering member 65 enclosing the flexible member 41 in a sewing area A10. In this way, the seating portion 72, the posterior side portion 73 and the flexible member 41 are integrated with one another. As a result, a joined area between the seating portion 72 and the posterior side portion 73 is protected by the pipe-shaped member 30, while enabling the improvement in aesthetic property of the external appearance thereof.

Similarly, as shown in Fig. 23 (B), the seating portion 72 has one end inserted into the covering member 65 on a front side and fixed by sewing in a sewing area A11, with the flexible member 41 being provided at an opening end 71a.

The cover main body 71 constituted in this way can achieve the same effect as the foregoing embodiments due to the provision of the support 18.

Moreover, due to the outside member 74 being made of the small-meshed three-dimensional textile, the seating portion 72 can have a smoothed surface as well as the excellent design property and improved tough thereof.

Moreover, the seating portion 72 can prevent it from getting stuffy due to the same being made of the small-meshed three-dimensional textile. Furthermore, since the amount of the wind flowing below the seating portion 72 can be suppressed due to the two-layered structure of the outside member 74 and the inside member 75. As a result, it cam make the rider feel cool in a hot season, thus enabling it to be used in three seasons.

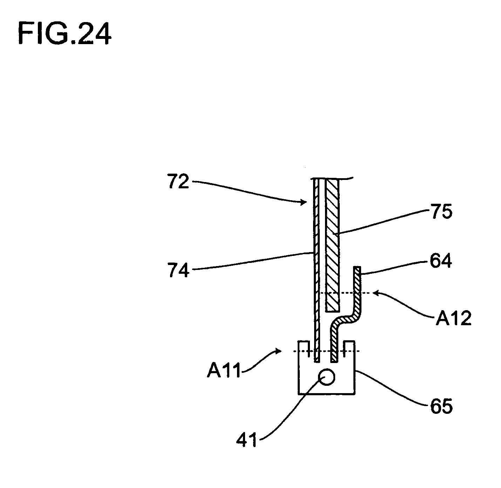

Alternatively, the outside member 74 and the inside member 75 may be joined together by sewing, not by using the iron tape 76. In that case, as shown in Fig. 24, the outside member 74 and the inside member 75 may be sewed to each other in a sewing area A12 through the tape member 64, while distal ends thereof are inserted into the covering member 65 on a front side so as to be integrated with one another together with the taping member 64 in a sewing area A11.

Also, whilst the seating portion 72 and the anterior portion 25 as well as the seating portion 72 and the posterior side portion 73 are sewed to each other through the pipe-shaped member 30, respectively, in the fourth embodiment, they may be joined directly to each other without using the pipe-shaped member 30.

Still also, whilst the anterior portion 25 and the posterior side portion 73 are made of synthetic leather in the fourth embodiment, they may be made of a three-dimensional textile.

### Fifth embodiment

Next, a fifth embodiment of the present invention will be explained with reference to the attached drawings. The overall structure of the fifth embodiment is the same as the foregoing third embodiment shown in Fig. 18 except the structure of its seating portion. In the meantime, the same structural components as those of the third embodiment are designated by the same reference numerals, and the repeated descriptions thereof are omitted.

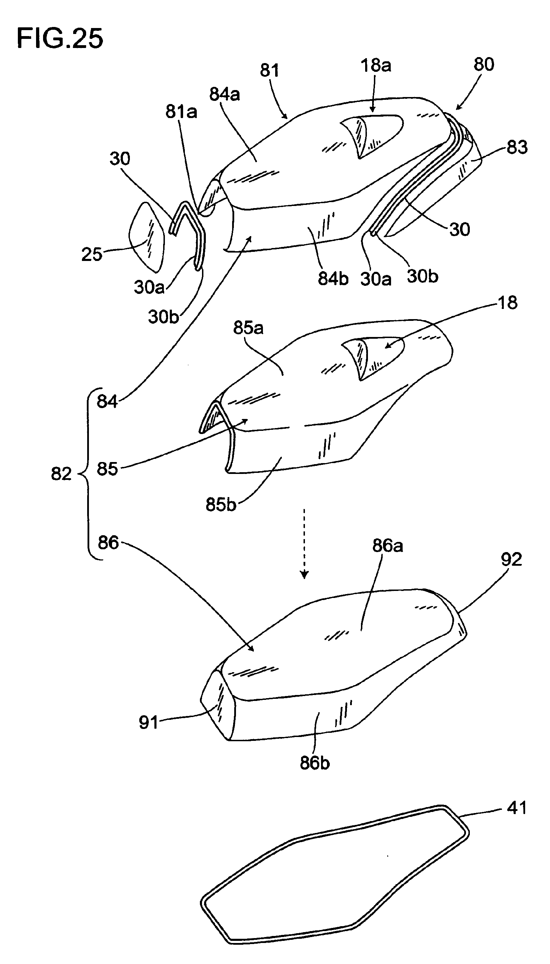

A seat cover 80 shown in Fig. 25 comprises: a cover main body 81; the support 18; and the flexible member 41 provided at an opening end 81a. The cover main body 81 comprises: the anterior portion 25; a seating portion 82; and a posterior side portion 83, which are integrated with one another together with the pipe-shaped member 30. The flexible member 41 is provided at the opening end 81a of the cover main body 81. The seating portion 82 has a three-layer structure, comprising an outside member 84, an intermediate member 85 and an inside member 86. In these outside member 74, intermediate member 85 and inside member 86, seating faces 84a, 85a and 86a are formed integrally with seating side faces 84b, 85b and 86b, respectively.

The outside member 84 and the intermediate member 85 are made of small-meshed three-dimensional textile, while the inside member 86 is made of synthetic leather.

The space 18a for inserting the support 18 is formed on the seating face 84a in the outside member 84. The intermediate member 85 has a portion cutout, corresponding to the anterior portion 25 and the posterior side portion 83, while the support 18 is provided on the seating surface 85a. The inside member 86 is formed in a single piece structure comprising an inside anterior portion 91 and an inside posterior side portion 92, having the seating face 86a formed substantially flat.

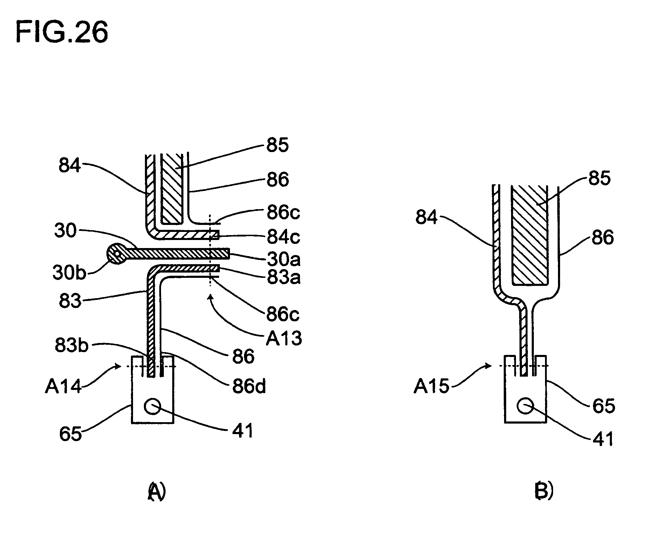

As shown in Fig. 26 (A) showing a section taken along a portion corresponding to that shown in Fig. 18, the outside member 84 and the inside member 86 of the seat cover 80 are joined to each other by sewing, using the pipe-shaped member 30. In other words, they are sewed to each other in a sewing area A13 by sandwiching the intermediate member 85 between the outside member 84 and the inside member 86 and then folding the respective ends to form folded portions 84c, 86c respectively, and sandwiching the attachment side 30a therebetween.

Furthermore, the other ends 83a and 86d of the posterior side portion 83 and the inside member 86 are inserted into the covering member 65, and sewed together in a sewing area A14. In this way, the seating portion 82, the posterior side portion 83 and the flexible member 41 are integrated with one another. Thus, a joined area between the outside member 84 and the inside member 86 is protected by the pipe-shaped member 30, while realizing the improvement in design property in the external appearance thereof.

Similarly, as shown in Fig. 26 (B), the seat cover 80 is structured on a front side such that the intermediate member 85 is sandwiched between the outside member 84 and the inside member 86, and a distal end thereof is inserted into the covering member 65, and sewed to the flexible member 41 in a sewing area A15.

In this way, the outside member 84, the intermediate member 85, and the inside member 86 are integrated with one another to form the seating portion 82, while the flexible member 41 is provided in the opening end 81a.

The seat cover 80 constituted in this way can achieve the same effect as the above-mentioned embodiments due to the provision of the support 18.

Moreover, the seat cover 80 can achieve the same effect as the above-mentioned fourth embodiment due to the outside member 84 being composed of the small-meshed three-dimensional textile.

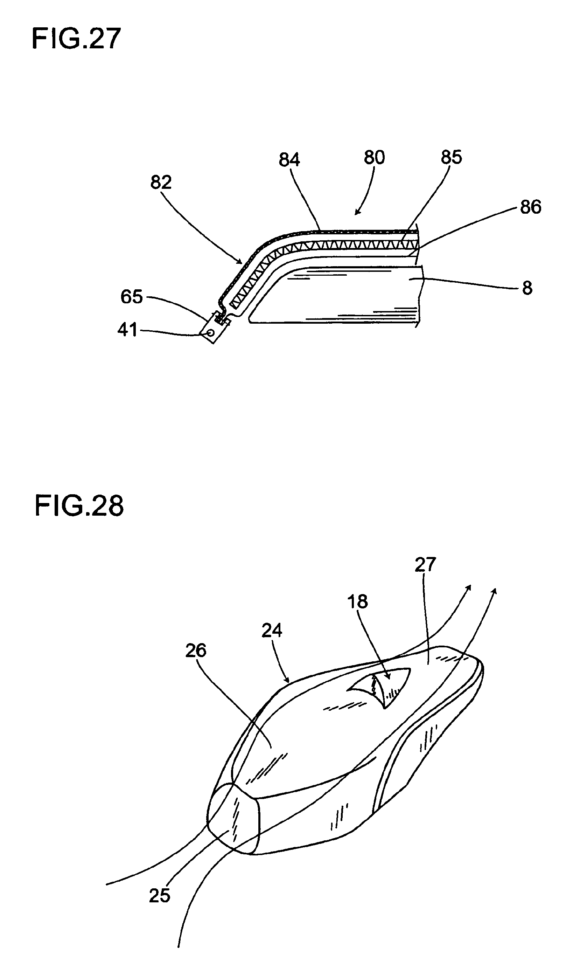

Further, since the seat cover 80 can exhibit an enlarged frictional force in a contact surface with the seat 8 due to the inside member 86 being made of synthetic leather, as shown in Fig. 27, it is possible to control the displacement of the seat cover 80 during the riding.

It should be noted that the seat cover 80 of the present embodiment can be used as a reversible one. That is, the seat cover 80 according to the present embodiment may be reversed to cover the seat 8, thus using the inside member 86 as the surface member. In that case, since the inside member 86 made of synthetic leather shields airflow, it can be comfortably used even in a winter season. As a result, the seat cover 80 according to the present embodiment can be used throughout the year. Moreover, since synthetic leather is excellent in waterproof property, it can prevent rain water from permeating the inside of the seat cover 80.

In the meantime, the outside member 84 and the intermediate member 85 may be composed of a relatively thin three-dimensional textile.

Although the intermediate member 85 is composed of the three-dimensional textile as is the case with the outside member 84 in the foregoing fifth embodiment, it may be composed of a thick three-dimensional textile.

Moreover, although the intermediate member 85 is composed of the small-meshed three-dimensional textile, like the outside member 84, it may be composed of synthetic leather.

Still moreover, although the intermediate member 85 is sandwiched between the outside member 84 and the inside member 86, and then the outer edges of the outside member 84 and the inside member 86 are sewed together in the foregoing embodiment, the intermediate member 85 may be integrated with synthetic leather by bonding or sewing.

Alternatively, although the anterior portion 25 of the cover main body 24 is made of synthetic leather in the foregoing embedment, it may be made of the three-dimensional textile. By making the anterior portion 25 of the three-dimensional textile, air permeability is improved due to the flow of air toward the direction indicated by an array in Fig. 28 being facilitated.

Still alternatively, the cover main body may be integrated together by bonding, although the respective portions thereof are integrated together by sewing in the foregoing embodiments.

Although the outside members 29, 74, and 84 are made of the three-dimensional textile in the foregoing embodiment, they may be made of an ordinary textile or mesh.

### Sixth Embodiment

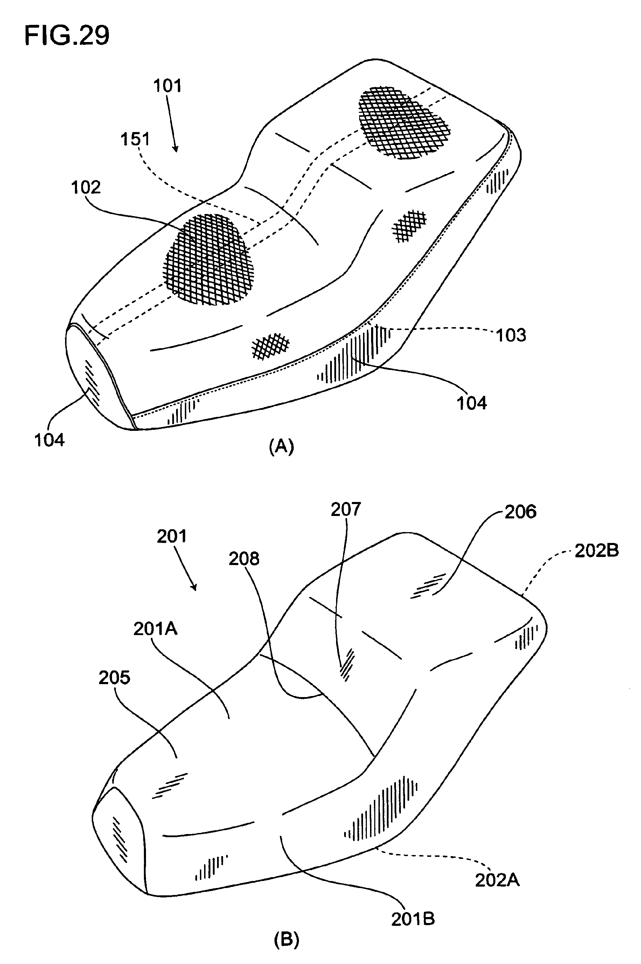

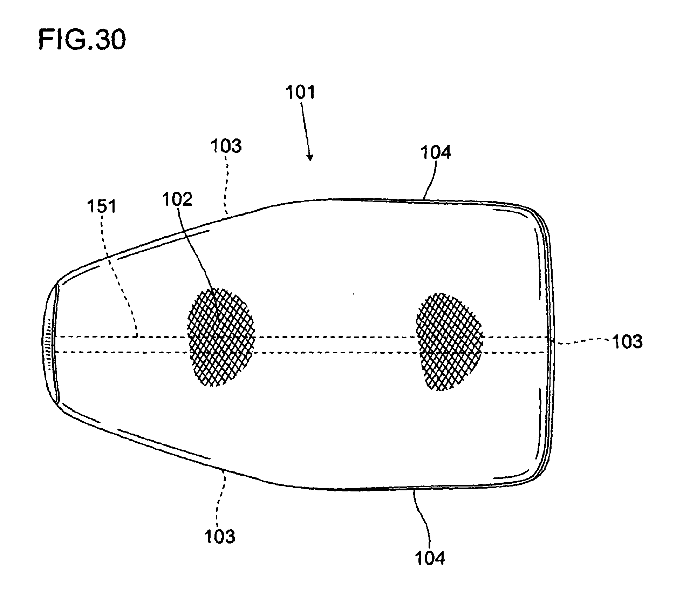

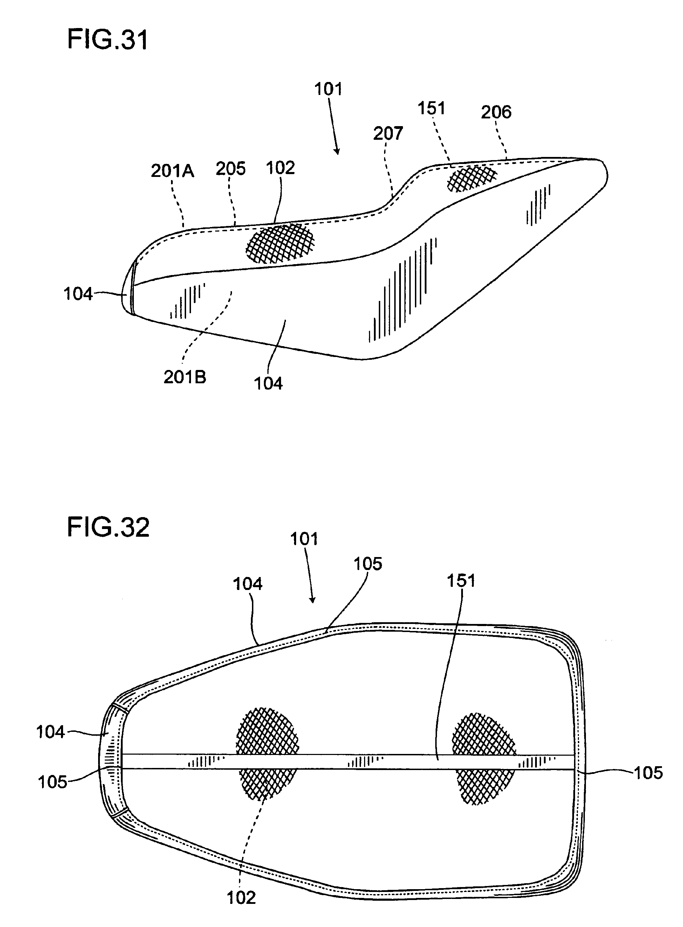

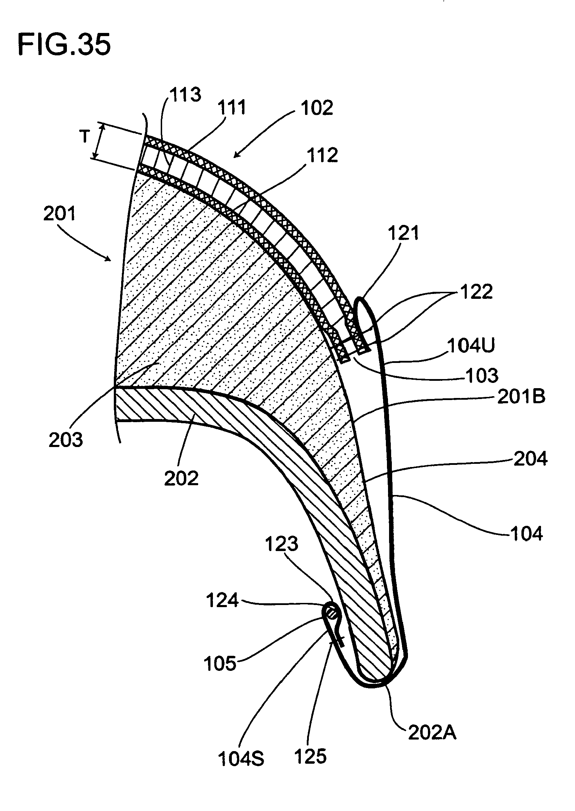

Next is a description of the seat cover according to a sixth embodiment of the present invention with reference to Figs. 29 to 35. First, one example of a seat for which a seat cover 101 of the present embodiment is used will be explained. This seat, denoted by reference numeral 201, is the one to be mounted in a vehicle or the like, comprising: a base plate 202 made of hard synthetic resin or the like; a cushion material 203 arranged on the base plate 202; a leathered surface 204 covering the cushion material 203, said leathered surface 204 being attached to said base plate 202, thereby providing a tandem type seat comprising a driver seat 205 on a front portion and a passenger seat 206 on a rear portion that is located higher than the front portion.

In addition, between the driver seat 205 and the passenger seat 206 is formed a step portion 207, below which is provided a depression counterpart 208. In a boundary region between the step portion 207 and the driver seat 205 is provided a concave portion, in which is formed said depression counterpart 208. The end of said leathered surface 204 is turned back toward the rear side of the base plate 202 in a peripheral edge of said base plate 202, and then fixed to the base plate 202 by means of a fixing means such as a stapler.

Said seat cover 101 is the one that is to be attached by covering said seat 201 therewith. The seat cover 101 comprises: a three-dimensional textile 102 which makes up a sheet-like cover main body covering a substantial top surface 201A and an upper portion of a lateral side face 201B of the seat 201; an attachment face member 104 attached to an edge 103 of the three-dimensional textile 102; an attaching portion 105 of the attachment face member 104; and a distortion-preventive member 151 which prevents the occurrence of the distortion of the three-dimensional textile 102. In the meantime, these three-dimensional textile 102 and the attachment face member 104 are made of a flexible sheet material. Moreover, the attachment face member 104 is provided in the entire circumference of the three-dimensional textile 102.

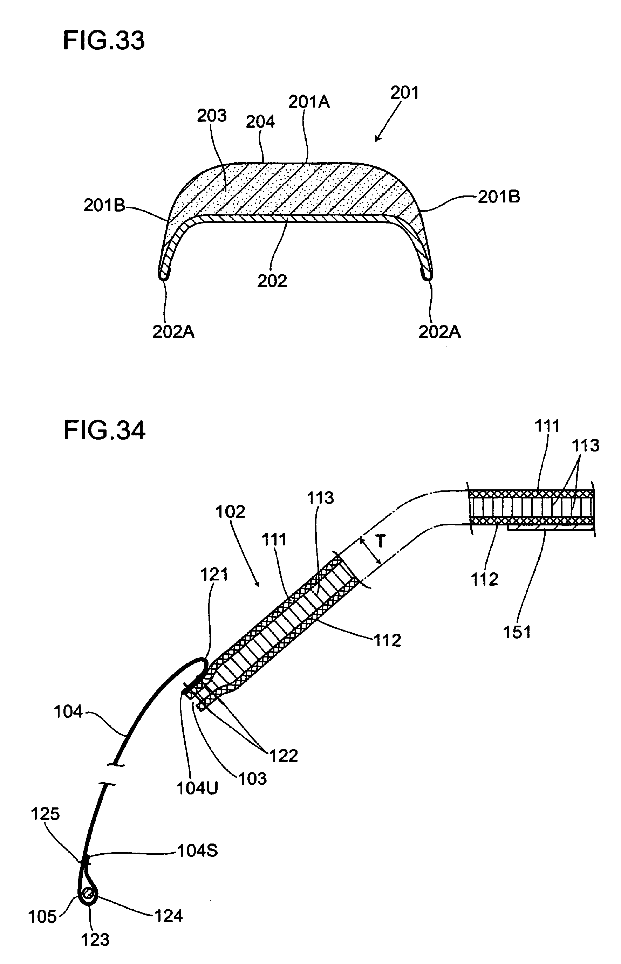

Here, the three-dimensional textile 102 is a three-dimensional textile fabric produced by using Double Lassen Weave, having a certain thickness of a three-dimensional knitted stitch structure made of plastic fiber or the like. As shown in Fig. 34, in the three-dimensional textile, an obverse-side layer 111 and a reverse-side layer 112 that exhibit meshed patterns are arranged in its thickness direction at intervals to be coupled by a connecting fiber 113 in the thickness direction, thereby providing an appropriate level of cushioning performance by its elasticity of the connecting fiber. The obverse-side layer 111 and the reverse-side layer 112 are formed with the meshed patterns of polygons, e.g., rhombus as shown in Fig. 34. The thickness of the three-dimensional textile is in the order of about 10 mm, while even if the thickness is in the order of 5 to 20 mm, yet good cushioning performance and air permeability can be obtained.

Moreover, the obverse-side layer 111 and the reverse-side layer 112 having rhombus meshed patterns are each oriented so that a direction in which a length of a major axis passing through the center of figure thereof becomes maximum is aligned with a width direction which intersects with the traveling direction of the vehicle.

Preferably, said distortion-preventive member 151 is formed in a plate or strip shape having a certain thickness, made of a material having a shape retaining property such as hard synthetic resin or metal. Alternatively, the distortion-preventive member 151 may be one having flexibility, such as hard cloth strip, as long as it is not stretchable in the length direction when it is subjected to tensile force in the length direction.

In this example, as shown in Figs. 29 to 31, said distortion-preventive member 151 is arranged in the anteriorposterior direction in the center of the width direction of the three-dimensional textile 102, and the distortion-preventive member 151 in the anteriorposterior direction is attached to said reverse-side layer 112 on the rear side of said three-dimensional textile 102. In this case, the distortion-preventive member 151 may be attached to the three-dimensional textile 102 by sewing, bonding or welding, and is preferably attached to the reverse-side layer 112 of the three-dimensional textile 102, thereby allowing the appearance at the side of the obverse-side layer 111 to remain unchanged. Moreover, said distortion-preventive member 151 has a contour coinciding with the form of the top surface 201A of the seat 201 with the distortion-preventive member 151 being attached to the seat 201. The distortion-preventive member 151 may be joined to the three-dimensional textile 102, either over an entire length thereof or at predetermined intervals. The inside edge 104U of said attachment face member 104 is attached onto the obverse-side layer 111 which is the front side of said edge 103. Then, a folded portion 121 is formed by folding back the inside edge 104U of said attachment face member 104 toward the back side, and thus the inside edge 104U located inside of the folded portion 121 is sewed to said edge 103 with thread 122.

In that case, the edge 103 of the three-dimensional textile 102 can be joined to the attachment face member 104 by welding, if the attachment face member 104 as well as the three-dimensional textile 102 is a weldable plastic sheet. Alternatively, though not illustrated, the edge of said distortion-preventive member 151 may be sewed to said edge 103 with said thread 122, if said distortion-preventive member 151 is something like a cloth band suitable for being sewed to.

Moreover, the outside edge 104S of the attachment face member 104 is turned back toward the back side to thereby form a folded portion 123, and then an annular flexible member 124 is arranged in this folded portion 123, and subsequently an overlapped portion of the folded portion 123 is sewed together in a saclike shape with thread 125, thus forming said attaching portion 105. That is, the outside edge 104S and the flexible member 124 constitute the attaching portion 105. In addition, said flexible member 124 is composed of an elastic cord or the like, having an elastic force to decrease the circumferential dimension of the annular outside edge 104S of said attachment face member 104.

Next is a description of the behavior of the above-structured seat cover. The beltlike distortion-preventive member 151 is provided on the three-dimensional textile 102 of the seat cover 101, and thus the distortion of the three-dimensional textile 102 can be prevented, improving the stability of the seat 201 with the seat cover 101 being attached thereto. Moreover, the seat cover 101 is made less likely to get wrinkled, and the thread of textile is hardly broken, thus resulting in improved durability. In addition, if a driver shifts his/her waist on the seat 201 in association with the weight shift during steering, no distortion will be caused by the shift on the seat cover 101, thus giving a better fit to the driver.

Thus, the seat cover according to the present embodiment comprises: the flexible three-dimensional textile 102 with the meshed pattern covering the seat 201; the attachment face member 104 attached to the edge 103 of the three-dimensional textile 102; the attaching portion 105 that is provided in the attachment face member 104 and is capable of being attached to the seat 201; and the distortion-preventive member 151 that prevents the distortion of the three-dimensional textile 102, thereby allowing the distortion-preventive member 151 to prevent the distortion of the three-dimensional textile 102, enabling the three-dimensional textile 102 from coming off or being displaced from the seat 201, or from getting wrinkled, resulting in the improved durability of the seat cover 101. In addition to the foregoing, the seat cover 101 is allowed to be attached more stably, so that a user is allowed to feel more stable in the vehicle.

Further, since the distortion-preventive member 151 is provided on the reverse-side layer 112 of the three-dimensional textile 102 facing the seat 201 side, the distortion-preventive member 151 is not exposed to the surface side of the three-dimensional textile 102. In the meantime, it is possible to visually confirm the presence of the distortion-preventive member 151 through the meshed pattern of the three-dimensional textile 102.

Furthermore, since the distortion-preventive member 151 is arranged in the length direction of the seat 201, it can prevent the distortion of the three-dimensional textile 102 particularly in the length direction.

Still further, since the distortion-preventive member 151 is formed in a belt shape with a predetermined width, the improved preventive effect is obtained against the coming-off phenomenon or uplift of the seat cover.

### Seventh Embodiment

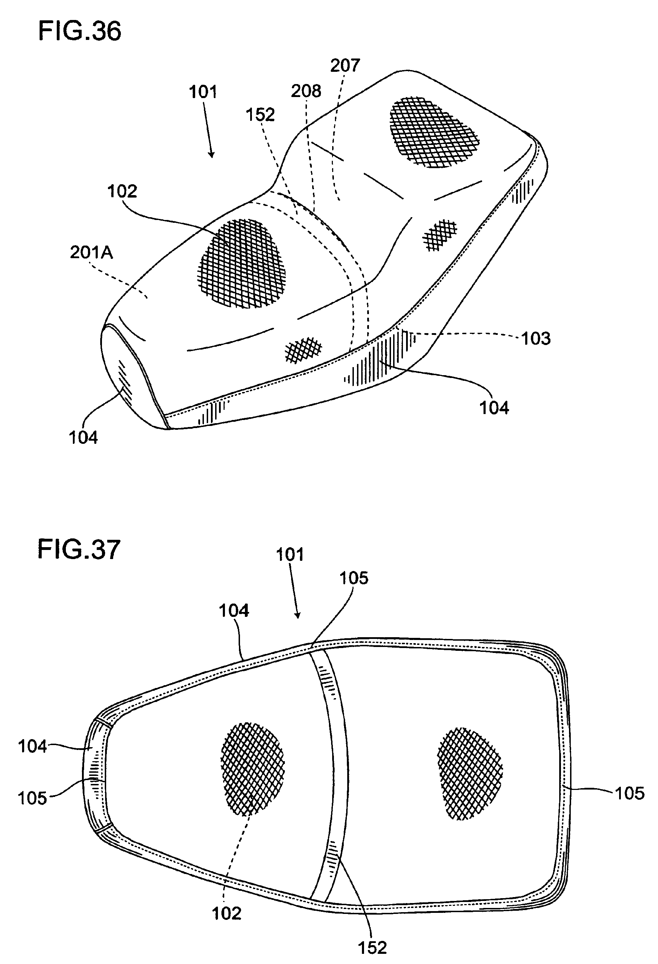

Figs. 36 and 37 show a seventh embodiment of the present invention, in which the same portions as those described in the foregoing embodiments are designated by the same reference numerals, and their repeated description would be omitted.

In this embodiment, a distortion-preventive member 152 of the same structure as said distortion-preventive member 151 is provided on the rear surface of the three-dimensional textile 102 in the width direction, that is, on the reverse-side layer 112 of the three-dimensional textile 102. In the case of the tandem type seat 201 as illustrated, the distortion-preventive member 152 extending in the width direction is preferably provided on a position corresponding to a top surface 201A in front of the step portion 207.

Thus, according to the embodiment, the same functions and effects those described in each of the above-mentioned embodiments are achieved. Specifically, since said distortion-preventive member 152 is provided in the width direction of the seat 201, it is possible to prevent the occurrence of the distortion in the width direction of the three-dimensional textile 102.

Moreover, since the seat 201 is of tandem type, including the step portion 207 between the driver seat 205 and the passenger seat 206, the uplift of the seat cover 101 is liable to take place structurally below the step portion 207. Nevertheless, due to the distortion-preventive member 152 being arranged in the width direction in a position corresponding to the top surface 201A below the step portion 207, it is possible to effectively prevent the uplift of the sear cover 101.

### Eighth Embodiment

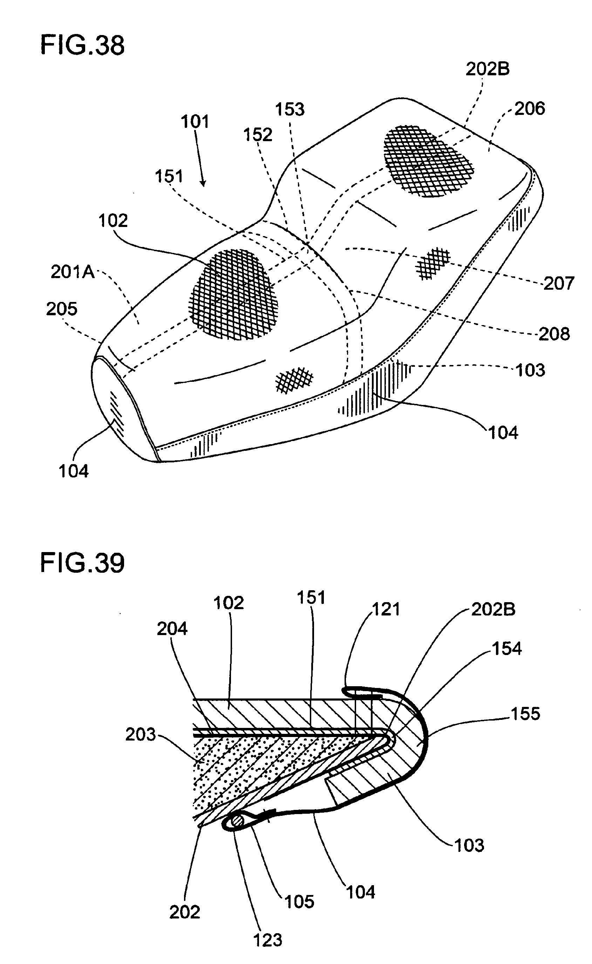

Figs. 38 and 39 show an eighth embodiment of the present invention, in which the same portions as those described in the foregoing embodiments are designated by the same reference numerals, and their repeated description would be omitted.

In this embodiment, there are provided a longitudinal distortion-preventive member 151 and a transverse distortion-preventive member 151, which are allowed to intersect and joined to each other at a crossover portion 153.

Moreover, the rear end of said distortion-preventive member 151 is turned down toward the rear side to thereby form a substantially J-shaped folded portion 154. Similarly, the edge 103 of said three-dimensional textile 102 is turned down toward the rear side to thereby form a folded portion 155. Said folded portion 154 is anchored by the rear edge 202B of the base plate 202 of the seat 201.

Thus, according to the embodiment, the same functions and effects those described in each of the above-mentioned embodiments are achieved. Besides, since said distortion-preventive member 151 has the tuned-back portion 154 corresponding to the rear edge 202B of the seat 201, the tuned-back portion 154 of the distortion-preventive member 151 is allowed to be anchored by the edge of the seat 201, thus regulating the displacement of the distortion-preventive member 151 toward the front, thereby ensuring the proper positioning of the seat 201. Here, the folded portion 154 may be formed in a letter J shape so as to be anchored by the edge.

Moreover, since the distortion-preventive member 151 extends in a front-to-rear direction in a central position with respect to the width direction, while the distortion-preventive member 152 extends in the width direction below the step portion 207 in a substantial central position with respect to the front-to-rear direction, it is possible to effectively prevent the distortion from occurring both in the length direction and in the width direction of the three-dimensional textile 102.

### Ninth Embodiment

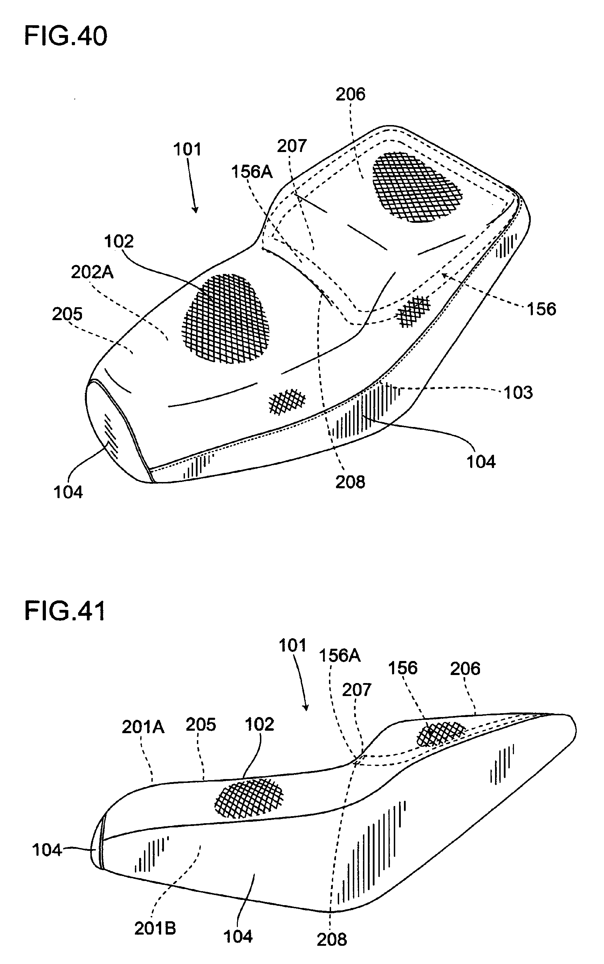

Figs. 40 and 41 show a ninth embodiment of the present invention, in which the same portions as those described in the foregoing embodiments are designated by the same reference numerals, and their repeated description would be omitted.

In this embodiment, a distortion-preventive member 156 of the same structure as said distortion-preventive member 151 is provided annularly in a manner surrounding a passenger's seat corresponding portion in the three-dimensional textile 102. The annular distortion-preventive member 156 is attached to the reverse-side layer 112 as a rear surface of said three-dimensional textile 102.

The anterior portion 156A of said distortion-preventive member 156 is located in the lower portion of said step portion 207, and is arranged in a width direction, while the central and posterior portions thereof are arranged so that they may be provided substantially along the inside of the edge 103 of the three-dimensional textile 102.

Thus, according to the embodiment, the same functions and effects those described in each of the above-mentioned embodiments are achieved. Besides, since said distortion-preventive member 156 is provided annularly in a manner surrounding the passenger's seat 206, the distortion-preventive member 156 is allowed to be attached to the passenger's seat 206 with the same being placed in a proper position, thus making it possible to effectively prevent the distortion of the three-dimensional textile 102 associated with the uplift thereof.

### Tenth Embodiment

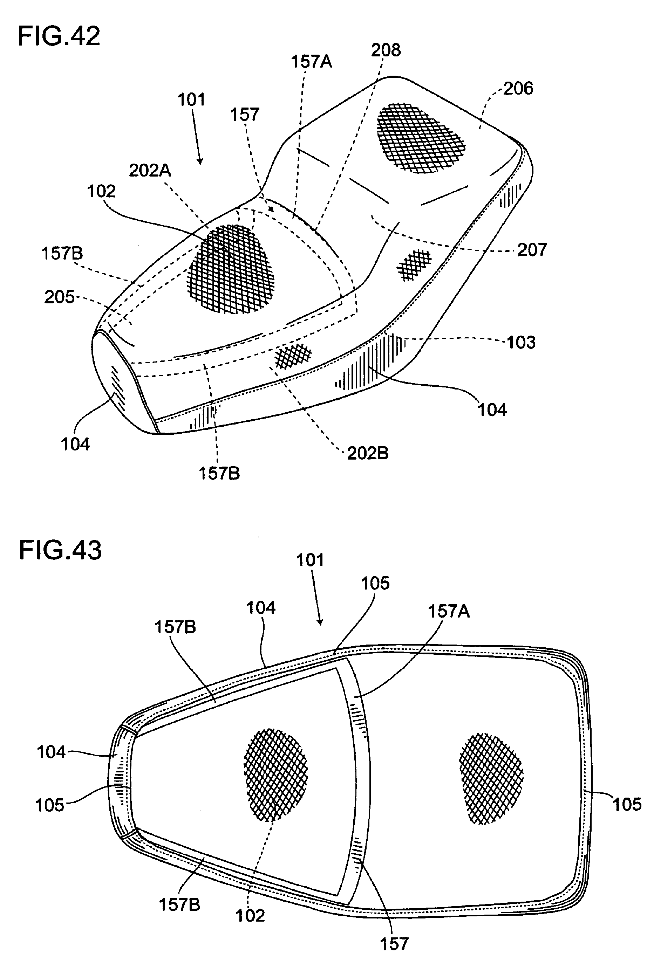

Figs. 42 to 44 show a tenth embodiment of the present invention, in which the same portions as those described in the foregoing embodiments are designated by the same reference numerals, and their repeated description would be omitted.

In this embodiment, a distortion-preventive member 157 of the same structure as said distortion-preventive member 151 is formed in a substantially U-shape so as to comprise a concavity corresponding region 157A and side corresponding portions 157B at both sides. When the seat cover is attached, the concavity corresponding region 157A is either partly inserted into or arranged along said step portion 207, while the side corresponding portions 157B are arranged on the lateral side faces 201B in the front portion of the driver seat 205. The distortion-preventive member 157 is attached to the reverse-side layer 112 as a rear surface of said three-dimensional textile 102.

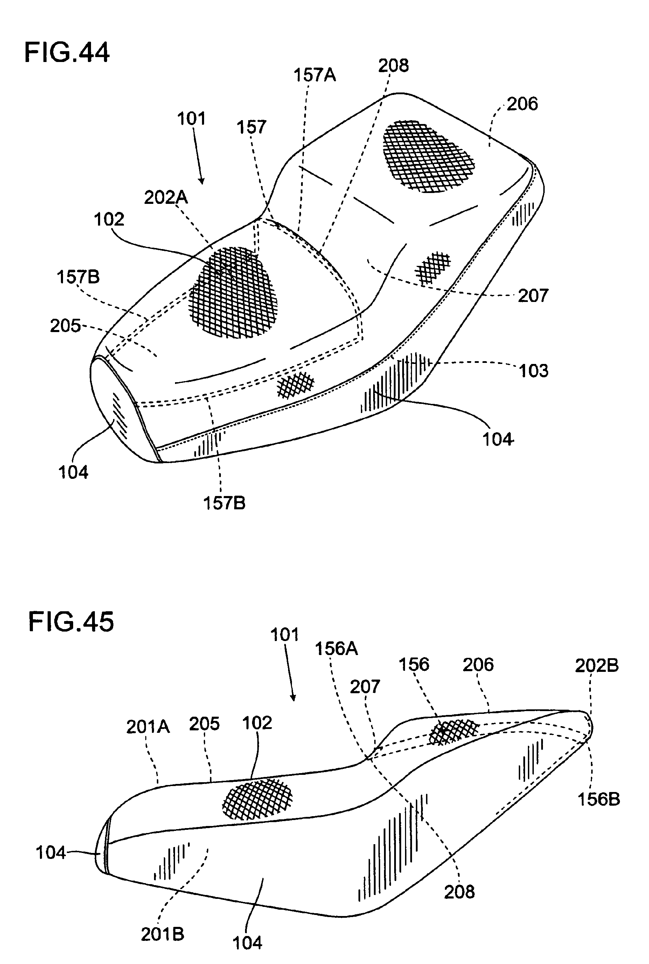

In the meantime, in order to make it easy to insert said concavity corresponding region 157A into said step portion 207 or to arrange the same therealong, said distortion-preventive member 157 may be formed in a rod shape having a circular cross section, made from resin or stainless steel, as shown in Fig. 44.

Thus, according to the embodiment, the same functions and effects those described in each of the above-mentioned embodiments are achieved. Besides, since said distortion-preventive member 151 is formed in a substantially U-shape, comprising the concavity corresponding region 157A provided in the width direction at the posterior portion of the driver seat 205 and the side corresponding portions 157B provided at the sides of the driver seat 205, it is possible to effectively prevent the distortion of the three-dimensional textile 102 of the driver seat 205. Moreover, as shown in Fig. 44, since the distortion-preventive member 157 comprises a rod member bent in a substantially U-shape, it becomes easier to insert the concavity corresponding region 157A into said step portion 207 or to arrange the same therealong, thus permitting the distortion-preventive member 157 to be well fitted to the seat 201.

### Eleventh Embodiment

FIG. 45 shows an eleventh embodiment of the present invention. The same reference numerals are used for portions the same as in each embodiment described above and a detailed description is given with the duplicate description of the same portions omitted. The figure represents a modified example of the tenth embodiment. A backside 156B of the annular distortion-preventive member 156 is arranged inside the attachment face member 104 so that the backside 156B thereof can be locked to an underside of the rear edge 202B of the base plate 202.

Thus, also according to the present embodiment, the same functions and effects as in each of the foregoing embodiments are achieved, Further, the backside 156B of the distortion-preventive member 156 is locked to the underside of the seat 201. Hence, the rear part of the seat cover 101 can be fixed to the seat 201 by means of the distortion-preventive member 156.

### Twelfth Embodiment

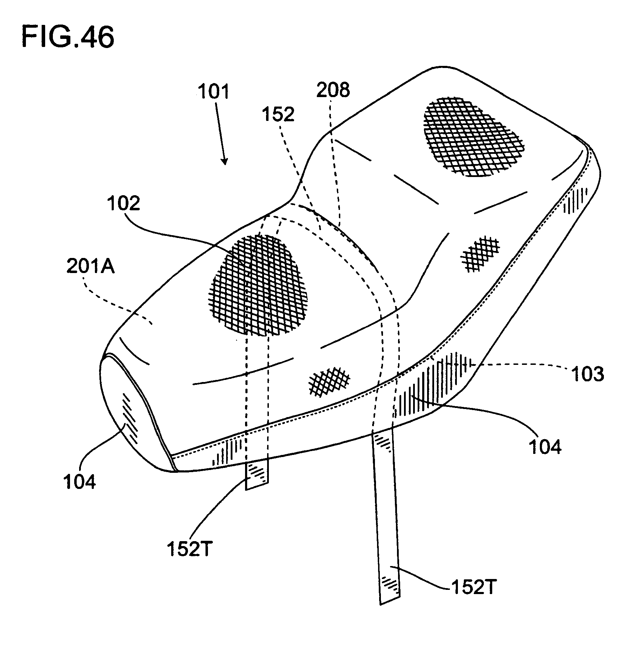

FIG. 46 shows a twelfth embodiment of the present invention. The same reference numerals are used for portions the same as in each embodiment described above and a detailed description is given with the duplicate description of the same portions omitted. The figure represents a modified example of the seventh embodiment. Both ends 152T, 152T of the distortion-preventive member 152 are allowed to extend downward and then both the ends 152T, 152T are structured so as to be engageable with or disengageable from each other below the base plate 202. Various types of engaging means (not shown) such as a hook and loop fastener, a hook and a button can be employed for that purpose. It should be noted that the engaging means is of a type that is both engageable and disengageable.

Thus, also according to the present embodiment, the same functions and effects as in the foregoing embodiments are achieved. Specifically according to the present embodiment, the flexible distortion-preventive member 152 that comprises a belt or the like is laterally arranged, and further both the ends 152T, 152T are allowed to extend, and structured so as to be engageable with each other at the underside of the seat 201. Hence, the seat cover 101 can be attached to the seat 201 by means of the distortion-preventive member 152 with the seat cover 101 being properly positioned.

Alternatively, the distortion-preventive member 152 may be strip- or belt-shaped one made of metal or of synthetic resin, while both the ends 152T, 152T may be separately made of a cloth belt or the like so that proximal ends of both the ends 152T, 152T may be attached to the attachment face member 104, respectively.

### Thirteenth Embodiment

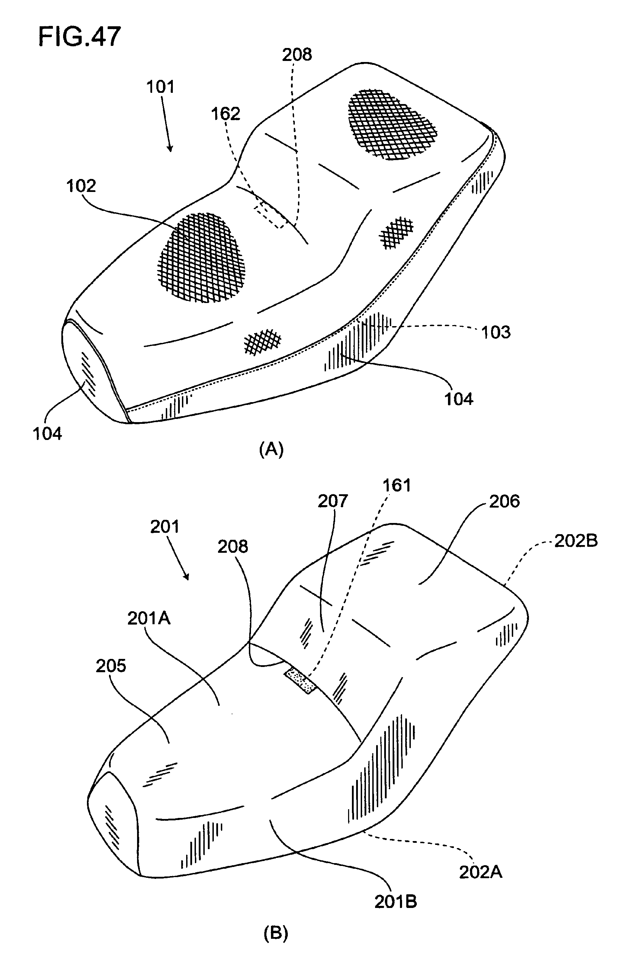

FIG. 47 shows a thirteenth embodiment of the present invention. The same reference numerals are used for portions the same as in each embodiment described above and a detailed description is given with the duplicate description of the same portions omitted.

In this embodiment, a hook and loop fastener 161 acting as a detachable means is provided on the top surface 201A of the seat 201, while the hook and loop fastener 161 is provided at a front side of the depression counterpart 208 and approximately at the center with respect to the width direction thereof with an engageable portion of the fastener being faced upward. On the other hand, another hook and loop fastener 162 which is detachably engaged with the hook and loop fastener 161 and acts as a detachable means is attached to the reverse-side layer 112 at the reverse side of the three-dimensional textile 102, with the engageable surface of the hook and loop fastener 162 being faced downward. Thus, the hook and loop fasteners 161, 162 make up the distortion-preventive member of the invention.

Thus, also according to the present embodiment, the same functions and effects as in the foregoing embodiments are achieved. Further, according to the present embodiment, the distortion-preventive member is made up by the hook and loop fasteners 161, 162 which are provided in the seat 201 and in the three-dimensional textile 102. Hence, by attaching the three-dimensional textile 102 to the seat 201 using the hook and loop fasteners 161, 162, the three-dimensional textile 102 can be prevented from being displaced and unstuck.

Further, the hook and loop fastener 161 is provided on the top surface 201A of the seat 201 and substantially at the center with respect to both the anteroposterior direction and the width direction. Hence, the distortion of the three-dimensional textile 102 can be effectively prevented from being generated.

### Fourteenth Embodiment

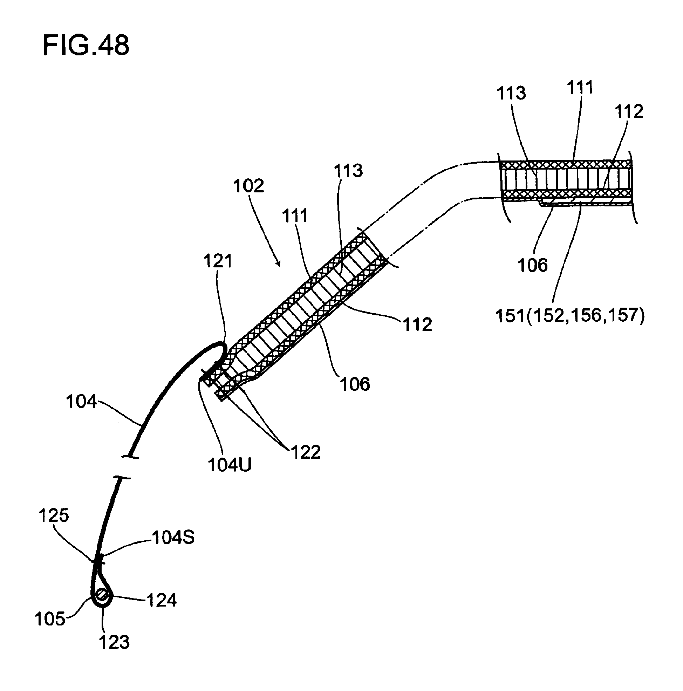

FIG. 48 to FIG. 49 show a fourteenth embodiment of the present invention. The same reference numerals are used for portions the same as in each embodiment described above and a detailed description is given with the duplicate description of the same portions omitted.

According to the present embodiment, there is provided an airtight sheet 106 in the reverse-side layer 112 at one surface side of the three-dimensional textile 102. This airtight sheet 106 is a sheet that is thinner than the three-dimensional textile 102 and can substantially block off water and air, such as one made from polyvinyl chloride (PVC) or the like. The airtight sheet 106 is attached to the reverse-side layer 112 of the three-dimensional textile 102 by using a wide variety of means such as bonding, sewing and welding

In this case, by attaching the airtight sheet 106 to the upper surfaces of the distortion-preventive members 151, 152, 156, 157 attached to the reverse-side layer 112, there can be provided such a structure that the distortion-preventive members 151, 152, 156, 157 are sandwiched between the three-dimensional textile 102 and the airtight sheet 106. In the meantime, if the airtight sheet 106 is attached by bonding or the like to the three-dimensional textile 102 and the distortion-preventive members 151, 152, 156, 157, the three-dimensional textile 102 and the distortion-preventive members 151, 152, 156, 157 need not be joined together.

Further, the airtight sheet 106 is of the identical size to or wider than the three-dimensional textile 102 such that it is provided over the whole area of the three-dimensional textile 102, thereby blocking off water and air from passing through the reverse-side layer 112.

Accordingly, air permeability is ensured on the obverse-side layer 111 opposed to the surface provided with the airtight sheet 106, while air permeability can be also ensured in a direction perpendicular to a thickness direction of the three-dimensional textile 102 between the obverse-side layer 111 and the reverse-side layer 112.

Further, at the time of a joining process at the edge 103, the inside edge 104U located inside the folded portion 121 is, as shown in FIG. 48, sewed to the edge 103 and an edge of the airtight sheet 106 by thread 122.

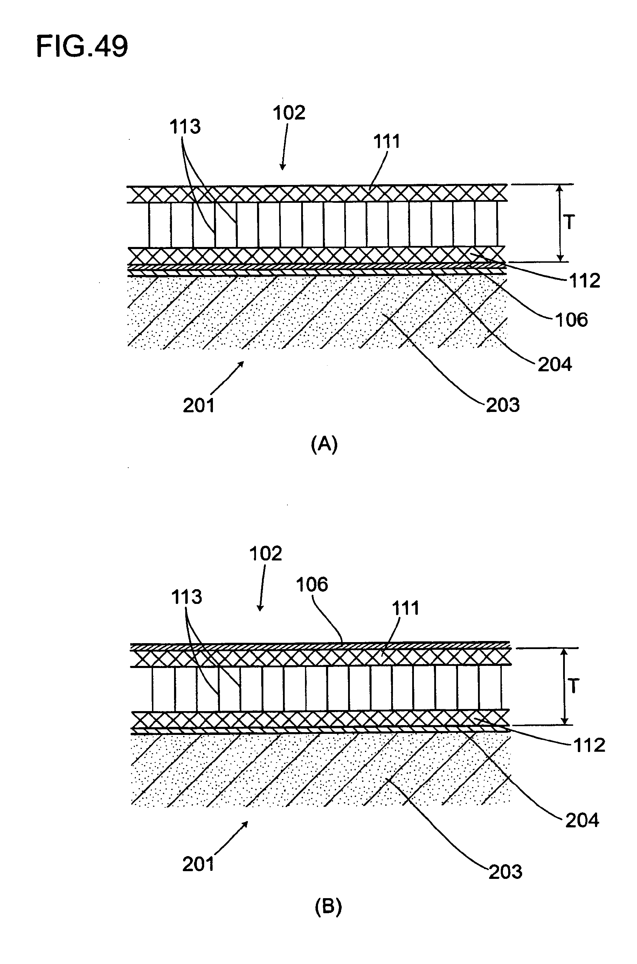

Furthermore, as shown in FIG. 49 (A), in the case that the seat cover 101 is attached to the seat 201 with the airtight sheet 106 underlaid, the air permeability of the three-dimensional textile 102 can be ensured, and the three-dimensional textile 102 is not contacted by the leathered surface 204 of the seat 201, enabling the leathered surface 204 to be protected by the airtight sheet 106.

On the contrary, in the case of attaching the seat cover 101 with the airtight sheet 106 laid topside, as shown in FIG. 49 (B), an aerial heat insulating layer corresponding to a thickness T of the three-dimensional textile 102 is formed between the airtight sheet 106 and the seat 201. Hence, even in a low-ambient temperature condition such as in winter or the like, the seat 201 is not extremely cooled, whereas the seat 201 is not heated to too high a temperature even under the boiling sun to thereby permit comfortable sitting with the airtight sheet 106 inverted to position the three-dimensional textile 102 upside.

Further, when the seat cover gets wet in a state shown in FIG. 49 (A), clothes also get wet. If the seat cover 101 gets wet due to rainfall or the like in the state shown in FIG. 49 (B), however, the clothes doesn't get wet by inverting the seat cover 101.

Thus, also according to the present embodiment, the same functions and effects as in the foregoing embodiments are achieved. Further, according to the present embodiment, there is provided the airtight sheet 106 on one surface of the three-dimensional textile 102 at the seat 201 side, and besides the distortion-preventive members 151, 152, 156, 157 are arranged between the airtight sheet 106 and the three-dimensional textile 102. Hence, when inverting the seat cover 101 to be used, under the condition of the low-ambient temperature in winter or the like, by attaching the seat cover 101 with the airtight sheet 106 laid outside, the aerial heat insulating layer corresponding to the thickness T of the three-dimensional textile 102 is formed between the airtight sheet 106 and the seat 201, so that the seat 201 is not exposed to the outside air, and besides, user's body heat is not drawn by the seat 201 cooled, thus enabling the user to comfortably sit thereon. Further, even if the airtight sheet 106 externally exposed gets wet with rainfall, the clothes of the user are free from getting wet by inverting the airtight sheet 106 at the time of attachment.

On the one hand, under the boiling sun, by attaching the seat cover with the airtight sheet 106 laid outside, the aerial heat insulating layer corresponding to the thickness T of the three-dimensional textile 102 is formed between the airtight sheet 106 and the seat 201 to permit a temperature rise of the seat 201 to be restrained. Further, by attaching the seat cover with the three-dimensional textile 102 laid outside at the time of riding, heat transfer from the seat 201 can be restrained. Consequently, due to the restrictions of the heat transfer, the users can enjoy comfortable riding together due to the air permeability of the three-dimensional textile 102.

Besides, according to the present embodiment, the attaching portion 105 permits the three-dimensional textile 102 to be attached to or detached from the seat 201 with the three-dimensional textile 102 being inverted. Hence, even if inverted, the seat cover 101 can still be attached to the seat 201 using the attaching portion 105 with the seat cover 101 being retained in that state.

Further, according to the present embodiment, the airtight sheet 106 is thinner than the three-dimensional textile 102, and is provided over the whole area of the three-dimensional textile 102. Hence, the air-tightness of the whole three-dimensional textile 102 with a meshed pattern can be maintained by the airtight sheet 106.

Furthermore, according to the present embodiment, the attachment face member 104 is attached onto one surface of the edge 103 opposed to the airtight sheet 106. Hence, the edge 103 of the three-dimensional textile 102 is sandwiched by the attachment face member 104 and the airtight sheet 106, enabling the three-dimensional textile 102 to be attached onto the attachment face member 104 and the airtight sheet 106.

Moreover, according to the present embodiment, the three-dimensional textile 102, the attachment face member 104 and the airtight sheet 106 are welded in the edge 103 of the three-dimensional textile 102. Hence, the three-dimensional textile 102, the attachment face member 104 and the airtight sheet 106 can be readily joined by welding. Besides, according to the present embodiment, the three-dimensional textile 102 covers an upper portion of the lateral side face 201B at a foreside of the seat 201. Hence, a heat-retaining property and air permeability not only in the top surface 201A of the seat 201 but also in the upper portion of the lateral side face 201B can be ensured by the seat cover 101.

### Fifteenth Embodiment

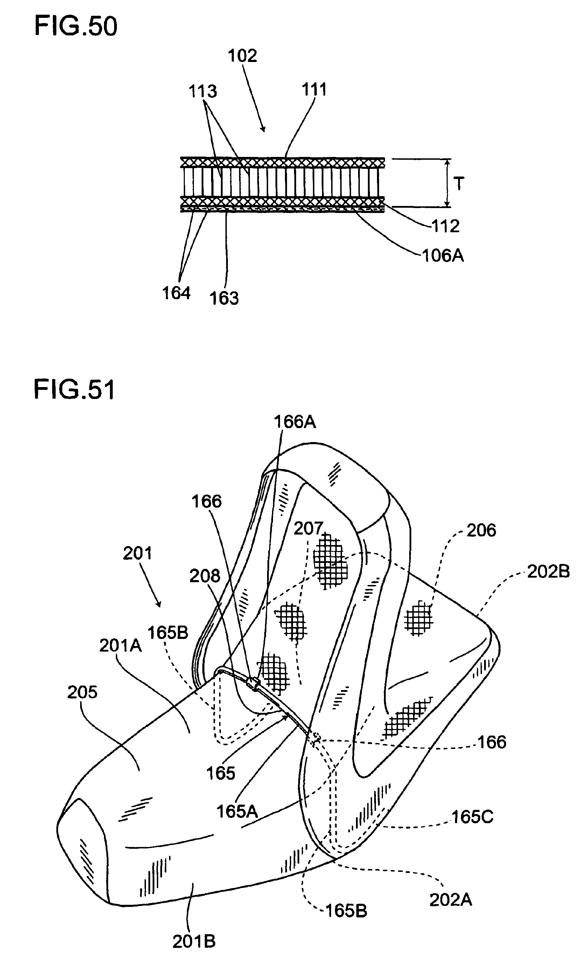

FIG. 50 shows a fifteen embodiment of the present invention. The same reference numerals are used for portions the same as in each embodiment described above and a detailed description is given with the duplicate description of the same portions omitted. In this embodiment, the distortion-preventive member is made up by an airtight sheet 106A. The airtight sheet 106A, as shown in FIG. 50, can fulfill a distortion-preventive function by employing a laminate sheet produced by laminating a nonwoven textile 163 with obverse and reverse sheet materials 164, 164, or otherwise, by employing a thick sheet material whose thickness is on the order of about 1 mm.

Even in the embodiment like this, the same functions and effects as those in each embodiment described above can be achieved. Specifically, according to the present embodiment, the distortion-preventive member is the airtight sheet 106 provided at one side of the three-dimensional textile 102, and thus the airtight sheet 106 is not only used for its primary role but also as a distortion-preventive member for preventing distortion of the three-dimensional textile 102, thereby allowing the manufacture of the seat cover to be performed easily.

### Sixteenth Embodiment

FIG. 49 and FIG. 50 show a sixteenth embodiment of the present invention. The same reference numerals are used for portions the same as in each embodiment described above and a detailed description is given with the duplicate description of the same portions omitted.

A distortion-preventive member 165 of the present embodiment comprises a vertically-arranged lateral side face support 165B extending vertically downward along the lateral side face 201B on both sides of a depression counterpart 165A; a horizontally-arranged lateral side face support 165C formed by bending the lower portion of each lateral side face support 165B and then extending the bent portion thereof along the lateral side face 201B above a periphery 202A. With the seat cover being attached, the depression counterpart 165A is partly inserted into the stepped portion 207 to be arranged thereon or is paralleled therewith to allow the lateral supporting portions 165B, 165B, 165C, 165C to just fit the corresponding lateral side faces 201B.

Further, an attaching portion 166A of an attaching tube 166 made of a cloth or the like is attached to the reverse side of the three-dimensional textile 102 by a wide variety of means such as sewing, bonding and welding. A plurality of the attaching tubes 166 are provided at intervals in a width direction of the seat 201. By inserting the depression counterpart 165A into the attaching tubes 166, the distortion-preventive member 165 is attached to the three-dimensional textile 102.

In addition, the distortion-preventive member 165 may be formed in a rod-like shape having a circular cross section other than a strip- or belt-like shape or a tabular shape and may be formed from a shape-retaining resin or steel.

Thus, also according to the present embodiment, the same functions and effects as those in each embodiment described above can be achieved. Further, the seat cover 101 includes the depression counterpart 165A which is arranged in a depression of the seat 201 and extends in a width direction and includes the lateral side face supporting portions 165B, 165B, 165C, 165C supporting the lateral side face 201B, and these lateral side face supporting portions 165B, 165B, 165C, 165C are located so as to sandwich the seat 201 from both the sides of the width direction. Hence, the depression counterpart 165A parallels a depression counterpart 208 in a recess to permit the three-dimensional textile 102 attached to the depression counterpart 165A to be prevented from being subjected to distortion including unsticking or uplift.

### Seventeenth Embodiment

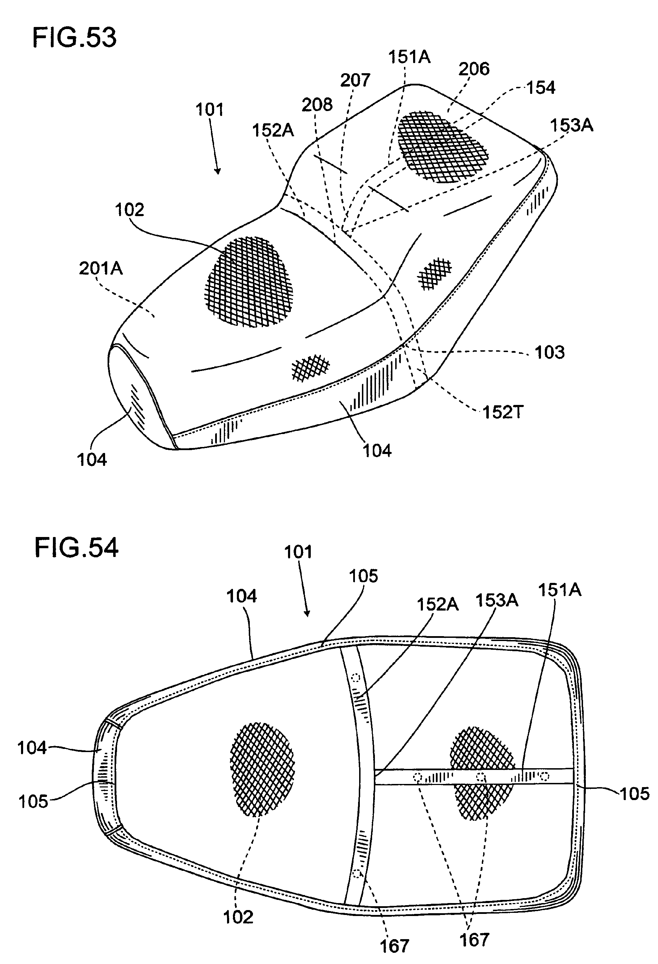

FIG. 53 and FIG. 54 show a seventeenth embodiment of the present invention. The same reference numerals are used for portions the same as in each embodiment described above and a detailed description is given with the duplicate description of the same portions omitted.

In this embodiment, the distortion-preventive member 152 with the same structure as the distortion-preventive member 151 is arranged at the reverse side of the three-dimensional textile 102 in a width direction, i.e., to the reverse-side layer 112 on the reverse side of the three-dimensional textile 102.

In the case of the tandem-type seat 201 shown, the distortion-preventive member 152A for the width direction is provided in a position corresponding to a top face of the depression counterpart 208 at the foot of the stepped portion 207, while the ends 152T of the distortion-preventive member 152A are extended and attached to the reverse side of the attachment face member 104. Further, an anterior end of the distortion-preventive member 151A for the anteroposterior direction is joined to an intersecting portion 153A in the center of the distortion-preventive member 152A with respect to the width direction, while at the lower end of the distortion-preventive member 151A, the aforesaid folded portion 154 is formed so to be located in the center with respect to the width direction.

Besides, as shown in FIG. 54, the distortion-preventive members 151A and the three-dimensional textile 102 are joined together at a plurality of joining points 167 arranged at given intervals by means of a wide variety of means such as sewing, bonding and welding.

As is discussed above, according to the present embodiment, the same functions and effects as those in each embodiment described above can be achieved. Further, the approximately T-shaped distortion-preventive members can certainly prevent the distortion accompanied by unsticking or uplift of the depression counterpart 208 as well as the distortion of the three-dimensional textile 102 at the passenger seat 206.

### Eighteenth Embodiment

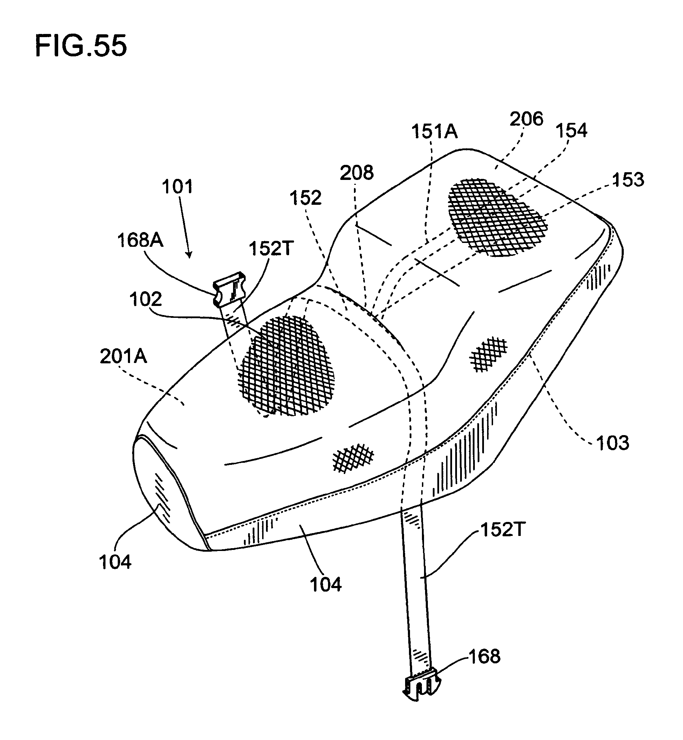

FIG. 55 shows an eighteenth embodiment of the present invention. The same reference numerals are used for portions the same as in each embodiment described above and a detailed description is given with the duplicate description of the same portions omitted. In this embodiment, both ends 152T, 152T of the distortion-preventive member 152 or 152A are provided in a downward extending manner. In the ends 152T, there are provided joining members 168, 168A which can be joined and locked together and can be disengaged from each other. Therefore, by the joining members 168, 168A, both the ends 152T, 152T can be joined and locked together and can be disengaged from each other at the underside of the base plate 202. In addition, the joining member 168 is of a male type which can be inserted into and disengaged from the female-type joining member 168A to be joined together.

Thus, according to the present embodiment, the same functions and effects as those in each of the foregoing embodiments can be achieved. Further, according to the present embodiment, the distortion-preventive member 152 which is made of a band or the like and has elasticity is laterally arranged, and besides both the ends 152T, 152T are provided in an extending manner to enable these both ends 152T, 152T to be joined together at the underside of the seat 201. Hence, the seat cover 101 can be attached to the seat 201 by the distortion-preventive members 152, 151A with the seat cover properly positioned.

### Nineteenth Embodiment

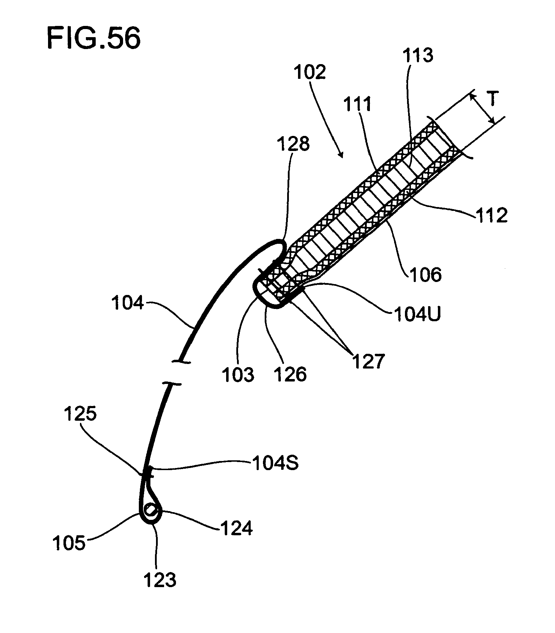

FIG. 56 shows a nineteenth embodiment of the present invention. The same reference numerals are used for portions the same as in each embodiment described above and a detailed description is given with the duplicate description of the same portions omitted.

FIG, 56 shows a modified example of the joint between the edge 103 of the three-dimensional textile 102 and the attachment face member 104. The inside edge 104U of the attachment face member 104 is folded to its obverse side to form an approximately U-shaped folded portion 126. The folded portion 126 encompasses the edge 103, and in that state, the folded portion 126 and the edge 103 are sewed together by a thread 127 or are welded together. Further, at a side of the obverse-side layer 111 of the three-dimensional textile 102, the attachment face member 104 is folded to its reverse side to form a folded portion 128 and then the attaching portion 105 of the attachment face member 104 is arranged at the underside of the three-dimensional textile 102 whose obverse-side layer faces upward.

Thus, according to the present embodiment as well, the same functions and effects as those in each of the foregoing embodiments can be achieved. Specifically, in the present embodiment, the folded portion 126 formed in mid-course of the attachment face member 104 encompasses the edge 103 of the three-dimensional textile 102. Hence, without using another member, the folded portion 126 of the attachment face member 104 encompasses the edge 103 of the three-dimensional textile 102 to protect it, and besides, the edge 103 can be externally made invisible.

### Twentieth Embodiment

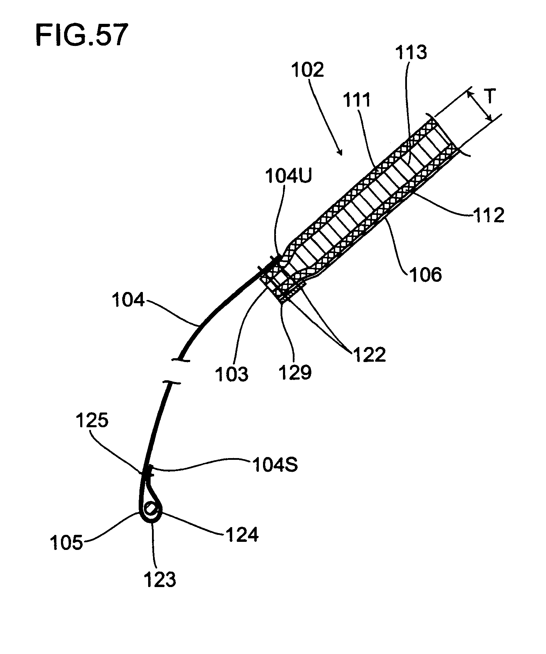

FIG. 57 shows a twentieth embodiment of the present invention. The same reference numerals are used for portions the same as in each embodiment described above and a detailed description is given with the duplicate description of the same portions omitted.

The figure represents another modified example of the joint of the edge 103 of the three-dimensional textile 102 and the attachment face member 104. According to the present embodiment, at the reverse side of the edge 103 of the three-dimensional textile 102, there is provided a contact belt 129, which is laid on top of the airtight sheet 106. Then, the inside edge 104U located inside the folded portion 121 is sewed to the edge 103, the airtight sheet 106 and the contact belt 129 by a thread 122.

Thus, according to the present embodiment as well, the same functions and effects as those in each of the foregoing embodiments can be achieved. Further, the edge 103 is protected by using the contact belt 129, thus facilitating a joining operation such as bonding, sewing and welding. Alternatively, in each of the foregoing embodiments, the contact belt 129 may be employed at a side of the reverse-side layer 112 like in the present embodiment.

### Twenty-first Embodiment

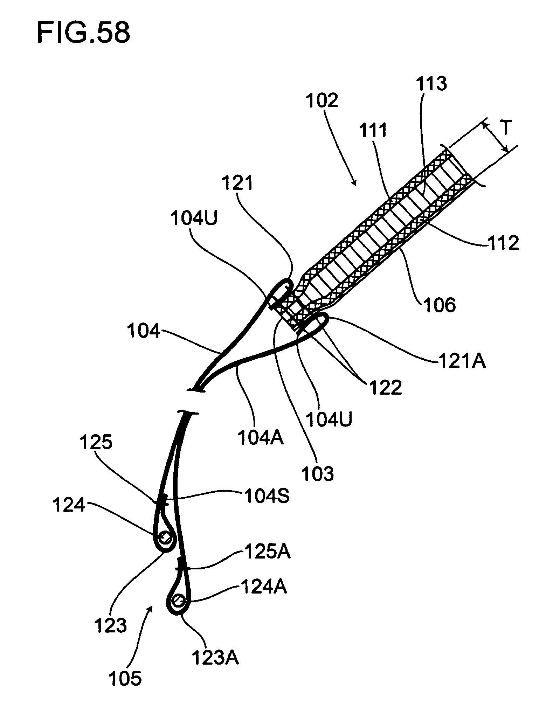

FIG. 58 shows a twenty-first embodiment of the present invention. The same reference numerals are used for portions the same as in each embodiment described above and a detailed description is given with the duplicate description of the same portions omitted.

The figure represents another modified example of the joint of the edge 103 of the three-dimensional textile 102 and the attaching face members 104, 104A. According to the present embodiment, the attachment face member 104 used in the above embodiment and an attachment face member 104A with the same structure as the attachment face member 104 are employed, and the inside edge 104U of the attachment face member 104A is overlapped with the airtight sheet 106 at the reveres side layer 112 of the edge 103 to be attached to the edge 103. In addition, a reverse side of the attachment face member 104 and a reverse side of the attachment face member 104A are mated together to be overlapped with each other. Then, the inside edge 104U of the attachment face member 104A is folded back to its reverse side to form a folded portion 121A, and then the inside edge 104U located inside the folded portion 121A, the edge 103, the airtight sheet 106 and the inside edge 104U located inside the folded portion 121 are sewed together by the thread 122.

Further, an outer edge 104S of the attachment face member 104A is folded to its reverse side to form a folded portion 123A. Then, an annular flexible member 124A is arranged inside the folded portion 123A and the overlapped portion of the folded portion 123A is sewed in a pouched shape by a thread 125A to form the attaching portion 105. In the meantime, the flexible member 124A comprises a rubber cord or the like.

Furthermore, the attaching face members 104, 104A are joined together at an appropriate position. For example, they may be at least partially joined together, by sewing, bonding or welding at the outer edge 104S side.

Thus, according to the present embodiment as well, the same functions and effects as those in each of the foregoing embodiments can be achieved. Further, the edge 103 is sandwiched between the attaching face members 104, 104A so as to protect the edge 103, and therefore, even if the seat cover 101 is inverted, the edge 103 is not exposed.

### Twenty-second Embodiment

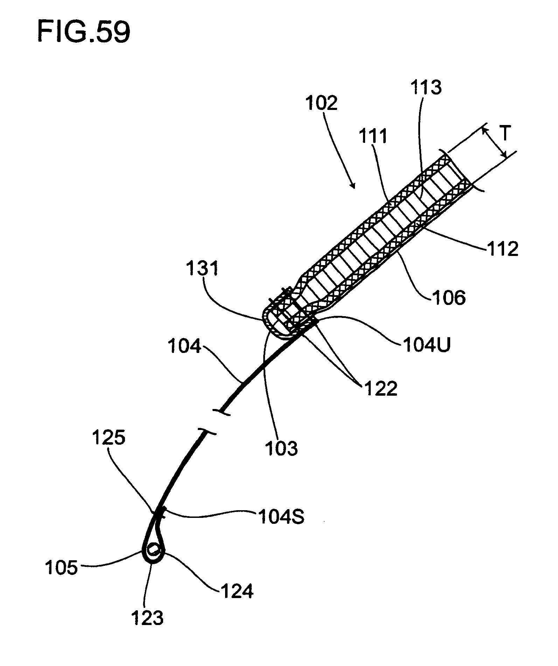

FIG. 59 shows a twenty-second embodiment of the present invention. The same reference numerals are used for portions the same as in each embodiment described above and a detailed description is given with the duplicate description of the same portions omitted.

According to the present embodiment, the edge 103 of the three-dimensional textile 102 and an edge of the airtight sheet 106 are enveloped with an edge band 131 formed in an approximately U shape.

At one of the obverse and reverse sides of the three-dimensional textile 102, the inside edge 104U of the attachment face member 104 is overlapped with the edge band 131. In this embodiment, the inside edge 104U is overlapped with the reverse side of the three-dimensional textile 102 to sew the edge band 131, the edge 103 and the attachment face member 104 together with the inside edge 104U by the thread 122.

In this case, the three-dimensional textile 102 is a weldable plastic textile, and if the attachment face member 104, the airtight sheet 106 and the edge band 131 are made of a weldable material, then the edge 103 of the three-dimensional textile 102, the attachment face member 104, the airtight sheet 106 and the edge band 131 can be joined together by welding. In the meantime, the edge band 131 is provided in an entire circumference of the three-dimensional textile 102.

Thus, according to the present embodiment as well, the same functions and effects as those in each of the foregoing embodiments can be achieved. Further, the ends of the airtight sheet 106 and edge 103 are not exposed, improving the aesthetic property of the appearance due to the edge band 131.

### Twenty-third Embodiment

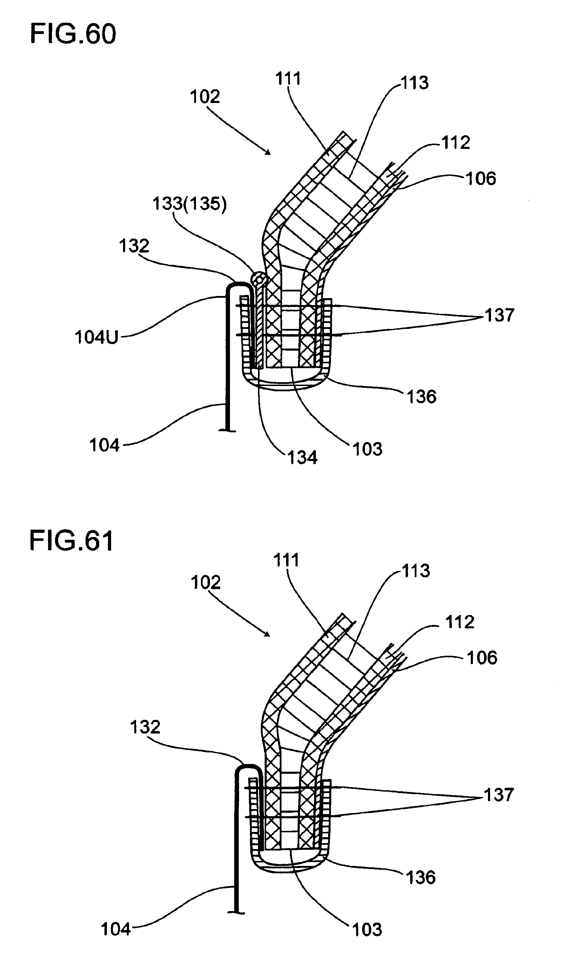

FIG. 60 shows a twenty-third embodiment of the present invention. The same reference numerals are used for portions the same as in each embodiment described above and a detailed description is given with the duplicate description of the same portions omitted.

In this embodiment, a pipe-shaped member 133 is employed at the joint of the edge 103 of the three-dimensional textile 102 and the attachment face member 104. The pipe-shaped member 133 is made of synthetic resin and is a long-size member having flexibility, comprising a tabular attaching piece 134 and a bead and reel portion 135 integrated with the attaching piece 134 at one end thereof.

Further, with the attaching piece 134 being sandwiched between an end of a folded portion 132 formed by folding the inside edge 104U of the attachment face member 104 to its reverse side and the edge 103 of the three-dimensional textile 102, these overlapped portions, i.e., the end of the folded portion 132, the attaching piece 134, the edge 103 and the edge of the airtight sheet 106 are enveloped with an approximately U-shaped edge band 136 to sew these portions together with the edge band 136 by thread 137. Alternatively, bonding or welding other than sewing may be utilized.

Thus, according to the present embodiment, the same functions and effects as those in each of the foregoing embodiments can be achieved. Further, the joint of the edge 103 of the three-dimensional textile 102, the edge of the airtight sheet 106 and the attachment face member 104 are protected by the pipe-shaped member 133, and besides an exterior design property can be improved.

### Twenty-fourth Embodiment

FIG. 61 shows a twenty-fourth embodiment of the present invention. The same reference numerals are used for portions the same as in each embodiment described above and a detailed description is given with the duplicate description of the same portions omitted.

In this embodiment, without using the pipe-shaped member 133 employed in the twenty-third embodiment, the end of the folded portion 132 overlapped and the edge 103 of the airtight sheet 106 are enveloped with an approximately U-shaped edge band 136 to sew these together with the edge band 136 by the thread 137. Alternatively, bonding or welding other than sewing may be utilized.

Thus, according to the present embodiment, the same functions and effects as those in each of the foregoing embodiments can be achieved. Further, the end of the folded portion 132 and the edge 103 of the airtight sheet 106 are enveloped with the edge band 136 and therefore these are not exposed to the outside.

### Twenty-fifth Embodiment

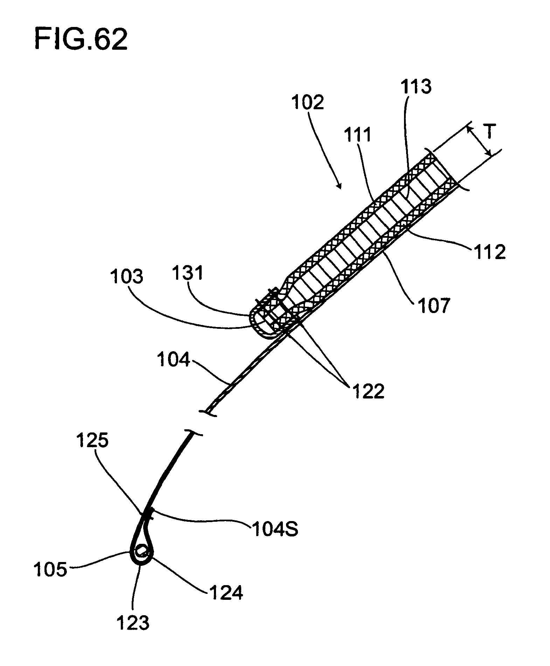

FIG. 62 shows a twenty-fifth embodiment of the present invention. The same reference numerals are used for portions the same as in each embodiment described above and a detailed description is given with the duplicate description of the same portions omitted.

In this embodiment, the airtight sheet 106 and the attachment face member 104 are formed from one sheet material, i.e., an airtight sheet 107. Specifically, the airtight sheet 107 integrated with an attaching face member is formed which is produced by making sizes of the airtight sheet 106 and the attachment face member 104 equal to each other. Then, the edge 103 of the three-dimensional textile 102 is enveloped with the edge band 131 formed in an approximate-U shape to sew the edge band 131, the edge 103 and the airtight sheet 107 with the thread 122. Otherwise, bonding or welding may be utilized.

Further, the outer edge of 104S of the attachment face member 104 of the airtight sheet 107 is folded to its reverse side to form the folded portion 123, inside which the annular flexible member 124 is arranged to sew the overlapped portion of the folded portion 123 in a pouched shape, forming the attaching portion 105.

Thus, according to the present embodiment, the same functions and effects as those in each of the foregoing embodiments can be achieved. Specifically, in this embodiment, the attachment face member 104 and the airtight sheet 106 are integrated into the airtight sheet 107 that is the integrated sheet material. Hence, the number of components can be reduced, thus improving the productivity.

### Twenty-sixth Embodiment

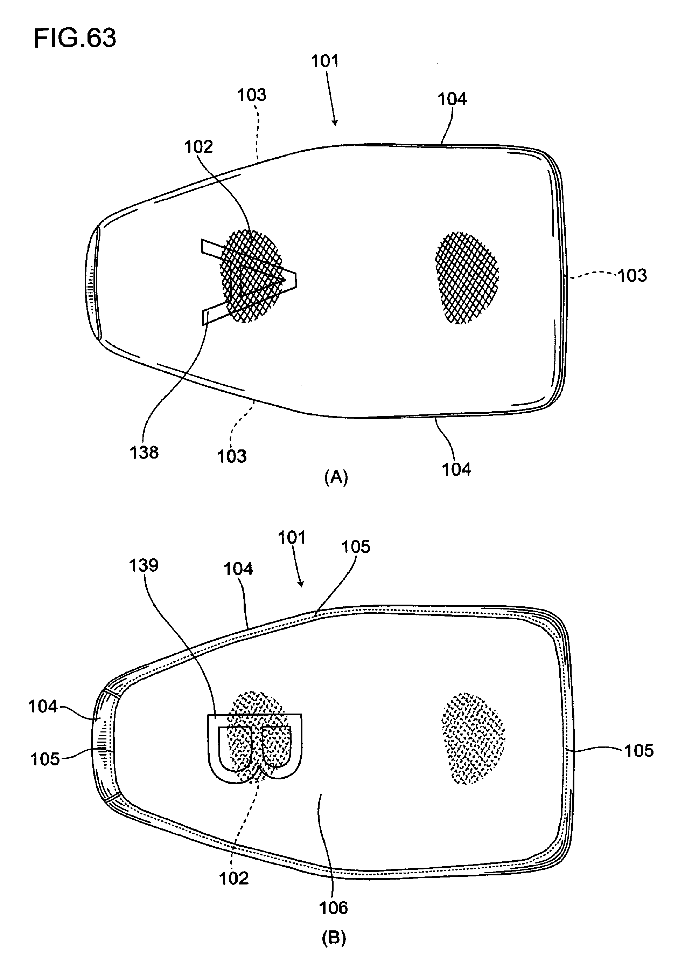

FIG. 63 shows a twenty-sixth embodiment of the present invention. The same reference numerals are used for portions the same as in each embodiment described above and a detailed description is given with the duplicate description of the same portions omitted.

In this embodiment, displays 138, 139 such as a figure, a character, a symbol or the like are provided on the obverse and reverse sides of the airtight sheet 106. Here, the obverse side of the airtight sheet 106 means a side that faces the upside when the seat cover 101 is inverted. The displays 138, 139 can be readily provided on the airtight sheet 106 by means of print or the like.

Accordingly, with the seat cover 101 being attached to the seat 201, the display 139 on the reverse side of the airtight sheet 106 can be seen through the meshed three-dimensional textile 102, while with the seat cover 101 being inverted to be attached to the seat 201, the display 138 on the obverse side of the airtight sheet 106 faced upward can be seen therethrough.

Thus, according to the present embodiment, the same functions and effects as those in each of the foregoing embodiments can be achieved. Further, according to the conventional seat cover made up by using the three-dimensional textile, such display could not be provided in knitted stitches if the display was provided by means of print or the like. According to the present embodiment, however, the displays 138, 139 are provided on the airtight sheet 106, and thus the nearly continuous displays can be formed. Specifically, when the display 138 is provided on the side facing the three-dimensional textile 102, the display 138 can be seen through the three-dimensional textile 102, while when the display 139 is provided on the opposite side of the three-dimensional textile 102, the display 139 appears on the upper side when the seat cover 101 is inverted to be attached to the seat 201.

### Twenty-seventh Embodiment

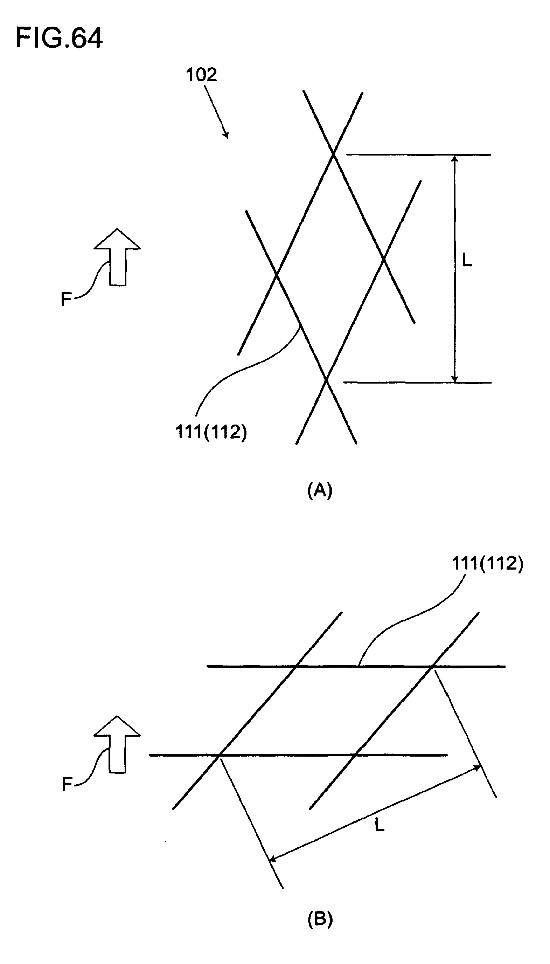

FIG. 64 shows a twenty-seventh embodiment of the present invention. The same reference numerals are used for portions the same as in each embodiment described above and a detailed description is given with the duplicate description of the same portions omitted.

In this embodiment, the obverse-side layer 111 and the reverse-side layer 112 which exhibit a lozenge pattern are arranged such that a direction of a major diagonal L passing through the center of the lozenge form is allowed to conform with a traveling direction F of a vehicle as shown in FIG. 64 (A), or otherwise, is allowed to intersect with the traveling direction F at an acute angle, as shown in FIG. 64 (B).

Accordingly, a plurality of the lozenge patterns appear with each major diagonal L aligned with the traveling direction, and hence an appearance giving a sharp impression can be obtained. Besides fitting feeling is improved during the driving when a body weight shifts in the width direction.

### Twenty-eighth Embodiment

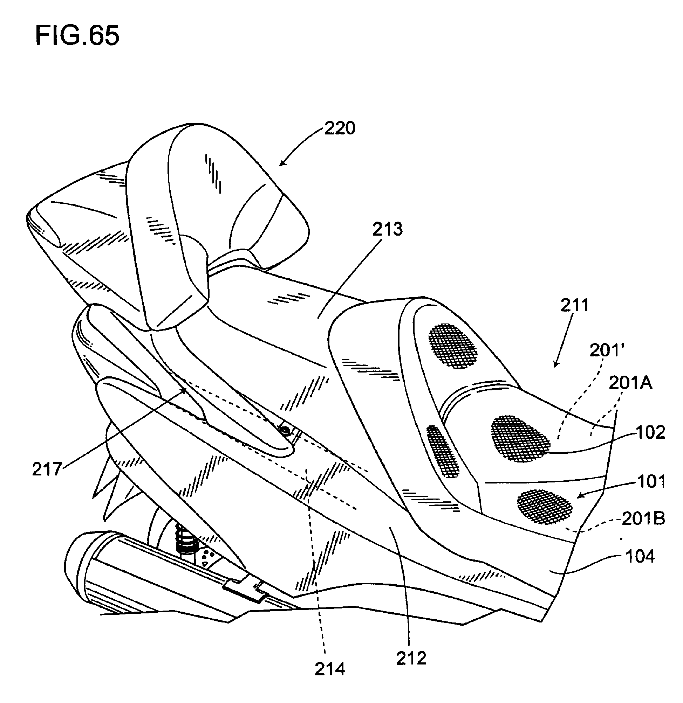

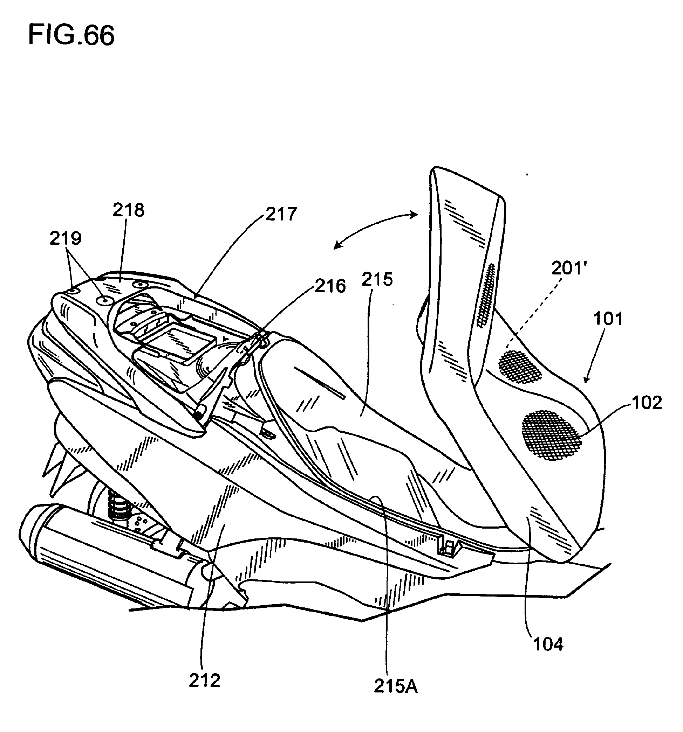

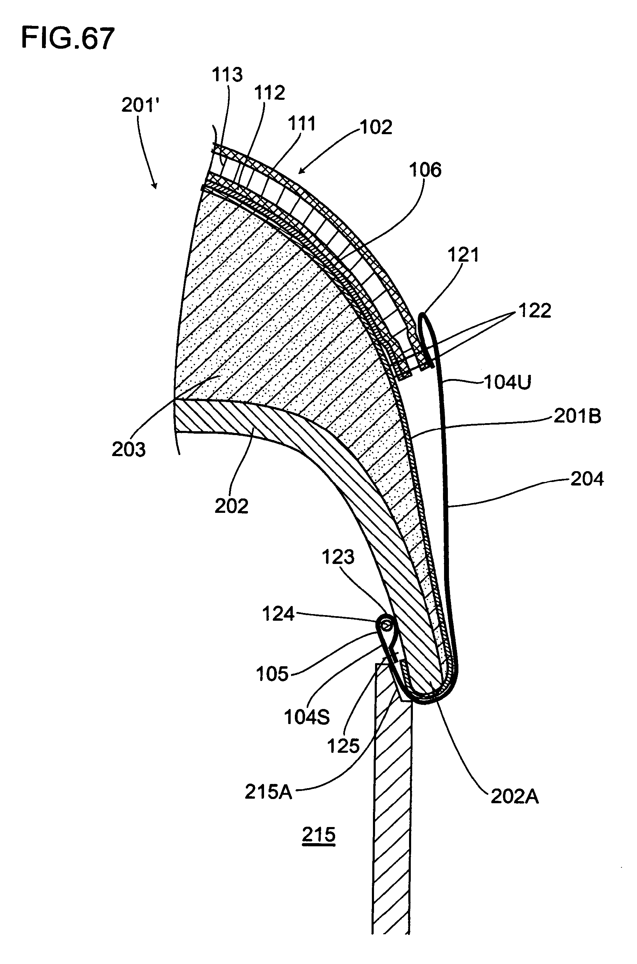

FIG. 65 to FIG. 67 show a twenty-eighth embodiment of the present invention. The same reference numerals are used for portions the same as in each embodiment described above and a detailed description is given with the duplicate description of the same portions omitted.

As shown in the drawings, a seat 201' on which a driver sits is arranged in a vehicle body frame 212 of a vehicle 211, and a passenger seat 213 for the passenger to sit thereon is provided behind the seat 201'.

The vehicle 211 is provided with a luggage box 215 in an inside space surrounded by a seat rail 214. The luggage box 215 is pivotably provided through a hinge portion (not shown) provided at a front end of the luggage box 215. The seat 201' is tilted toward the front of the vehicle body to thereby open the luggage box 215, while the seat 201' is brought into a closed state to thereby cover an upper portion of the luggage box 215 to seal it.

The seat 201' is provided with a locking means 216 at a rear end of the luggage box 215. Accordingly, by locking the locking means 216 with the seat 210' in a closed state, the seat 201' is kept from opening, and the locking means 216 is only released by handling an opening and closing operation unit in a travelable state after operating an ignition key.

The passenger seat 213 is provided separately from the seat 201' to be detachably mounted on a grab rail 217 of a type integrated with a rear carrier.

Here, in the rear-carrier-integrated-type grab rail 217, a plurality (e.g., 4) of mounting holes 219 are provided on a top surface of the rear carrier 218 provided on the rear end. A backrest assembly 220 is screwed via a rubber damper (not shown) to the mounting holes 219.

With the seat cover 101 attached to the seat 201', the attaching portion 105 of the attachment face member 104 is arranged alongside a bottom side of the base plate 202 of the seat 201'. Then, when the seat 201' with the seat cover 101 attached is closed to cover the luggage box 215, the attachment face member 104 is sandwiched between an opening edge 215A of the luggage box 215 and a peripheral edge 202A of the base plate 202, thus making it impossible to detach the seat cover 101 during the use of the seat 201'.

Thus, according to the present embodiment, the same functions and effects as those in each of the above embodiment can be achieved. Further, with the seat 201 being closed, the attaching portion 105 side that is a free end of the attachment face member 104 is fixedly sandwiched between the base plate 202 at the seat 201 side and the opening edge 215A of the luggage box 215. Besides, the seat cover 101 cannot be detached from the seat 201 once the seat 201 is locked.

### Twenty-ninth Embodiment

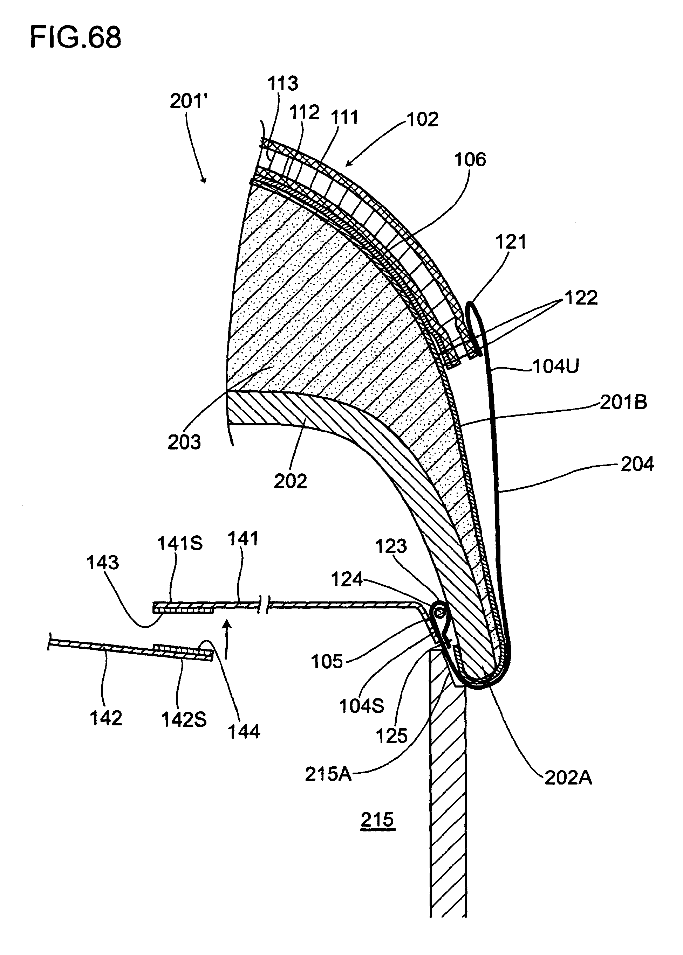

FIG. 68 shows a twenty-ninth embodiment of the present invention. The same reference numerals are used for portions the same as in each embodiment described above and a detailed description is given with the duplicate description of the same portions omitted.

In this embodiment, on either end of the seat cover 101 in the width direction, proximal ends of belt bodies 141, 142 are attached to the outer edge 104S side of the attachment face member 104. Further, hook and loop fasteners 143, 144 acting as a mutually engageable/disengageable locking means are provided at the distal ends 141S, 142S of the belt bodies 141, 142.

When the seat cover 101 is attached to the seat 201', and then the seat 201' is closed after fastening the hook and loop fasteners 143, 144 of the belt bodies 141, 142 on the underside of the base plate 202 of the seat 201', the proximal ends of the belt bodies 141, 142 are located inside the opening edge 215A of the luggage box 215.

Accordingly, with the seat 201' being locked, the belt bodies 141, 142 cannot be operated from external, resulting in no possible release of the fastening of the hook and loop fasteners 143, 144.

### Thirteenth Embodiment

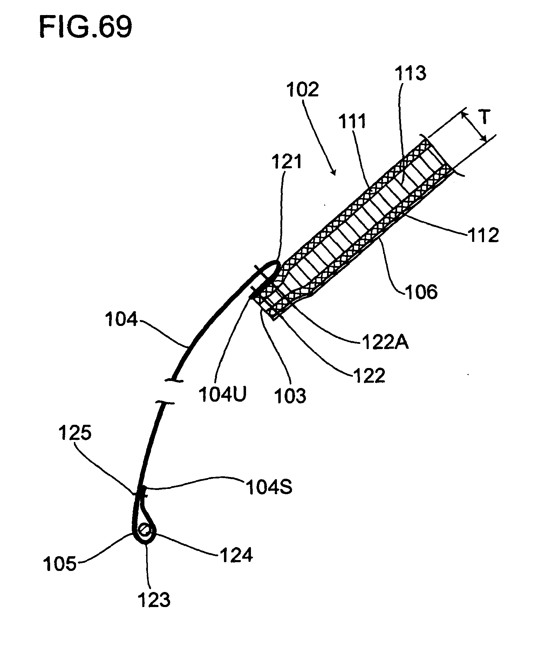

FIG. 69 shows a thirtieth embodiment of the present invention. The same reference numerals are used for portions the same as in each embodiment described above and a detailed description is given with the duplicate description of the same portions omitted.

In this embodiment, in addition to the structure in the sixth embodiment, the inside edge 104U located inside the folded portion 121, the edge 103 and the airtight sheet 106 are sewed by the thread 122 at an end of the edge 103. Further, overlapped portions of the folded portion 121, the edge 103 and an edge of the airtight sheet 106 are sewed together by a thread 122A acting as a nearly parallel stitch relative to the thread 122 and located inside the thread 122. In addition, the stitch of the thread 122 is located at the outside near the end of the edge 103, while the stitch of the thread 122A is located at the inside, away from the end of the edge 103.

As a result, as the seat cover for use with a two-wheeled motor vehicle seat 201 or a four-wheeled vehicle seat 201', the seat cover 101 can be produced through a stable mass production process, resulting in excellent quality, mass productivity and merchantability. Further, the three-dimensional textile 102 and the airtight sheet 106 which are uneven in thickness can be stably sewed using a machine-sewing thread.

Thus, according to the present embodiment, the same functions and effects as those in each of the foregoing embodiments can be achieved. Further, using the airtight sheet 106 made, for example, from polyvinyl chloride (PVC), designed patterns (not shown) acting as s display is printed on this airtight sheet 106. Thus, colors and the designed patterns on the airtight sheet 106 can be seen through the three-dimensional textile 102 from its obverse side, thus achieving nonconventional improvement in designing property for the seat cover using the three-dimensional textile 102.

### Thirty-first Embodiment

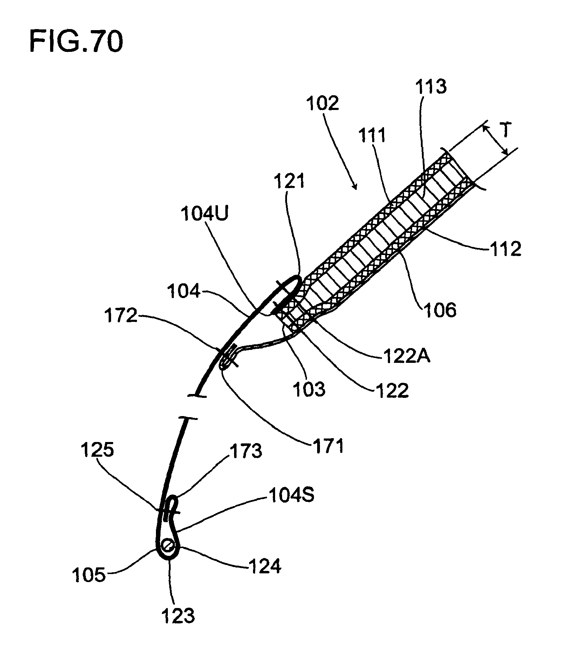

FIG. 70 shows a thirty-first embodiment of the present invention. The same reference numerals are used for portions the same as in each embodiment described above and a detailed description is given with the duplicate description of the same portions omitted.

In this embodiment, the edge of the airtight sheet 106 is extended to an outside of the edge 103 and is folded back to its reverse side to form a folded portion 171. An overlapped portion of the folded portion 171 is sewed to the reverse side of the attachment face member 104 by thread 172.

Further, the outer edge 104S of the attachment face member 104 is folded to its reverse side to form an outer edge folded portion 173 and the folded portion 123. The outer edge folded portion 173 then contacts the reverse side of the attachment face member 104 so that the outer edge 104S of the attachment face member 104 is concealed within the folded portion 123. Then, the annular flexible member 124 is arranged within the folded portion 123, and then, the overlapped portion of the outer edge folded portion 173 and a portion of the attachment face member 104 overlapping with the overlapped portion are sewed together by the thread 125 in a pouched shape to form the attaching portion 105. In other words, the outer edge 104S and the flexible member 124 constitutes the attaching portion 105.

Thus, according to the present embodiment, the same functions and effects as those in each of the foregoing embodiments can be achieved. Further, the attachment face member 104 and the folded portion 171 of the airtight sheet 106 are joined together and thus the ends of the three-dimensional textile 102 and the airtight sheet 106 are concealed between the reverse sides of the attachment face member 104 and the airtight sheet 106. Besides, by forming the outer edge folded portion 173, the edge of the attachment face member 104 is also concealed. Hence, even if the seat cover 101 is inverted, the ends of the three-dimensional textile 102, the attachment face member 104 and the airtight sheet 106 are not externally exposed.

### Thirty-second Embodiment

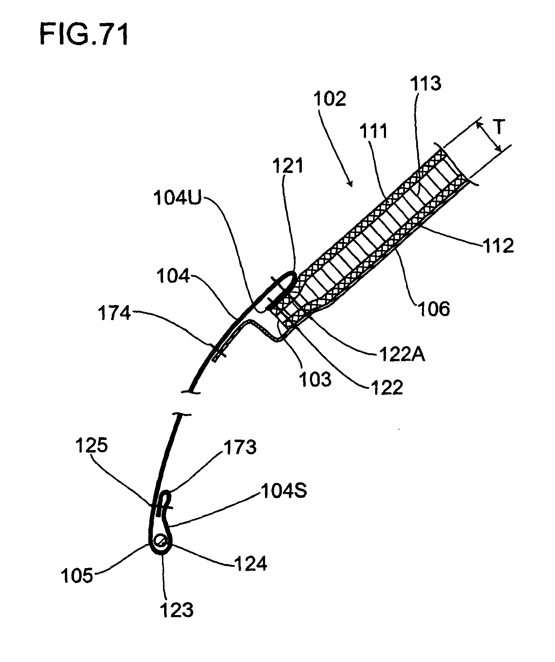

FIG. 71 shows a thirty-second embodiment of the present invention. The same reference numerals are used for portions the same as in each embodiment described above and a detailed description is given with the duplicate description of the same portions omitted.

In this embodiment, a single layer portion of the edge of the airtight sheet 106 extended to the outside of the edge 103 is sewed by thread 174 to the reverse side of the attachment face member 104, concealing the edge 103 of the three-dimensional textile 102 between the reverse side of the attachment face member 104 and the reverse side of the airtight sheet 106.

Thus, according to the present embodiment, the same functions and effects as those in each of the foregoing embodiments can be achieved. Further, even if the seat cover 101 is inverted, the edges of the three-dimensional textile 102 and the attachment face member 104 are not externally exposed.

### Thirty-third Embodiment

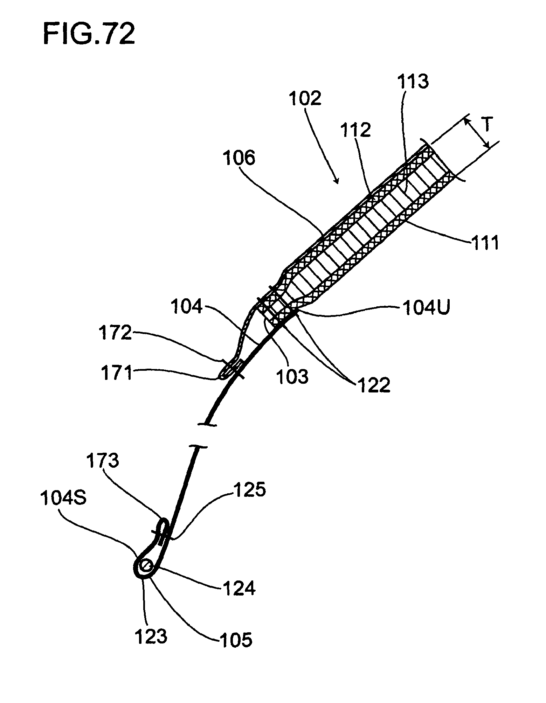

FIG. 72 shows a thirty-third embodiment of the present invention. The same reference numerals are used for portions the same as in each embodiment described above and a detailed description is given with the duplicate description of the same portions omitted.

In this embodiment, with the seat cover 102 being inverted and attached to the seat 201, 201', the airtight sheet 106 is located topside. Then, the inside edge 104 U of the attachment face member 104 is overlapped directly with the three-dimensional textile 102 to sew, in that state, the inside edge 104U of the attachment face member 104, the three-dimensional textile 102 and the airtight sheet 106 together by threads 122. According to the present embodiment, the same functions and effects as those in each of the above embodiment can be achieved.

### Thirty-fourth Embodiment

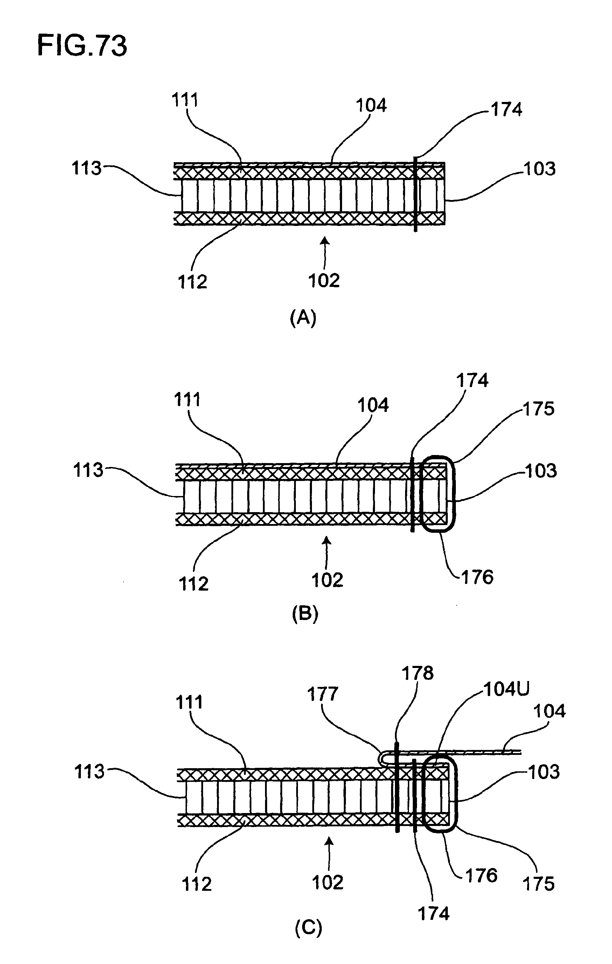

FIG. 73 shows a thirty-fourth embodiment of the present invention. The same reference numerals are used for portions the same as in each embodiment described above and a detailed description is given with the duplicate description of the same portions omitted.

The figure represents an example in which the edge 103 of the three-dimensional textile 102 is sewed by a thread. As shown in FIG. 73 (A), the attachment face member 104 is overlapped with the obverse side of the three-dimensional textile 102, and in that state, the reverse side of the attachment face member 104 is located topside. Then, at first, the edge 103 of the three-dimensional textile 102 and the attachment face member 104 are sewed together by the thread 174.

Next, as shown in FIG. 73 (B), the edge 103 of the three-dimensional textile 102 and the edge of the attachment face member 104 thus overlapped with each other are sewed by a thread 175 to form an oversewed edge portion 176.

Thereafter, as shown in FIG. 73 (C), the attachment face member 104 is inverted outward to form a folded portion 177 in the attaching face member 104 and then the overlapped portion of the folded portion 177 and the three-dimensional textile 102 are sewed together by a thread 178 in a portion inside the stitch of the thread 174.

Thus, according to the present embodiment, the same functions and effects as those in each of the foregoing embodiments can be achieved. Further, in this embodiment, the edge 103 of the three-dimensional textile 102 and the edge of the attachment face member 104 are sewed together to form the oversewed edge portion 176 by oversewing the edge 103 of the three-dimensional textile 102 and the edge of the attachment face member 104, and then the overlapped portion of the folded portion 177 formed by inverting the attachment face member 104 and the three-dimensional textile 102 are sewed together. Hence, the edge 103 of the three-dimensional textile 102 is prevented from coming apart, ensuring sewing strength given by the thread, enabling the finish of the edge 103 to become nice looking.

### Thirty-fifth Embodiment

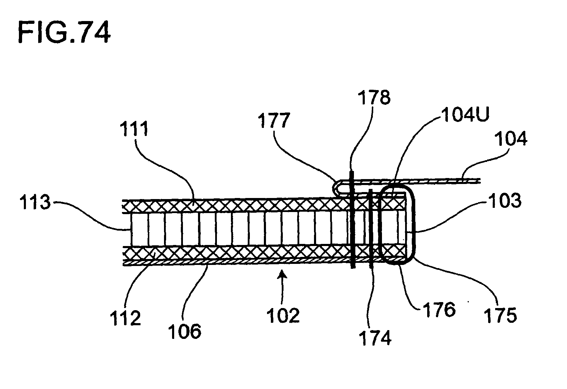

FIG. 74 shows a thirty-fifth embodiment of the present invention. The same reference numerals are used for portions the same as in each embodiment described above and a detailed description is given with the duplicate description of the same portions omitted. In this embodiment, the airtight sheet 106 is provided at the reverse side of the three-dimensional textile 102.

Thus, according to the present embodiment, the same functions and effects as those in each of the foregoing embodiments can be achieved. Further, in the present embodiment, the edge 103 of the three-dimensional textile 102, the attachment face member 104 and the airtight sheet 106 are sewed together, and specifically, the edge 103 of the three-dimensional textile 102, the edge of the attachment face member 104 and the edge of the airtight sheet 106 are oversewed by the thread 175 to form the oversewed edge portion 176, and besides the overlapped portion of the folded portion 177 formed by inverting the attachment face member 104, the three-dimensional textile 102 and the airtight sheet 106 are sewed together. Hence, the edge 103 of the three-dimensional textile 102 is prevented from coming apart, ensuring sewing strength given by the thread, enabling the finish of the edge 103 to be nice looking.

### Thirty-sixth Embodiment

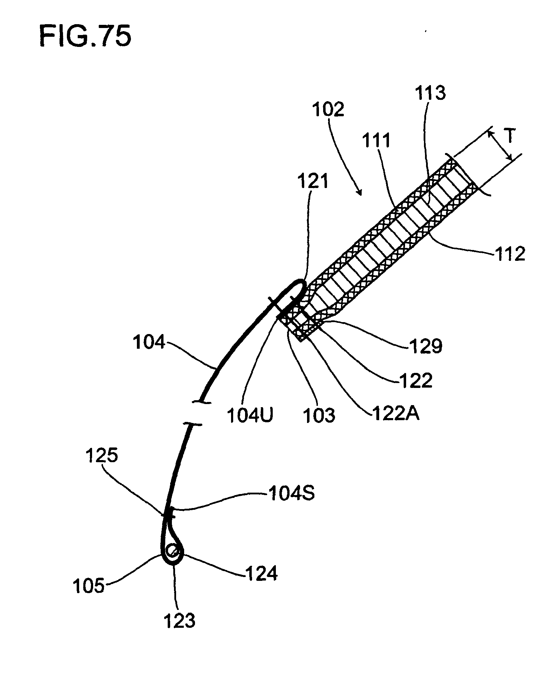

FIG. 75 shows a thirty-sixth embodiment of the present invention. The same reference numerals are used for portions the same as in each embodiment described above and a detailed description is given with the duplicate description of the same portions omitted.

In this embodiment, the contact belt 129 is provided at the reverse side of the edge 103 of the three-dimensional textile 102. The inside edge 104U located inside the folded portion 121, the edge 103 and the contact belt 129 are sewed together by thread 122. Besides, the overlapped portion of the folded portion 121, the edge 103 and the contact belt 129 are sewed together by the thread 122A that forms a stitch located outside the thread 122 substantially in parallel therewith.

Thus, also according to the present embodiment, the same functions and effects as those in each of the foregoing embodiments can be achieved. Further, the seat cover 101 can be stably produced in a mass production line as the seat cover for a two-wheeled motor vehicle or a four-wheel vehicle, achieving excellent quality, mass productivity and merchantability. Further, the uneven three-dimensional textile 102 and the attachment face member 104 can be stably sewed using machine-sewing thread.

It should be noted that in the present embodiment and the following embodiments as well, the airtight sheet (not shown) can be provided like in each of the foregoing embodiments.

### Thirty-seventh Embodiment

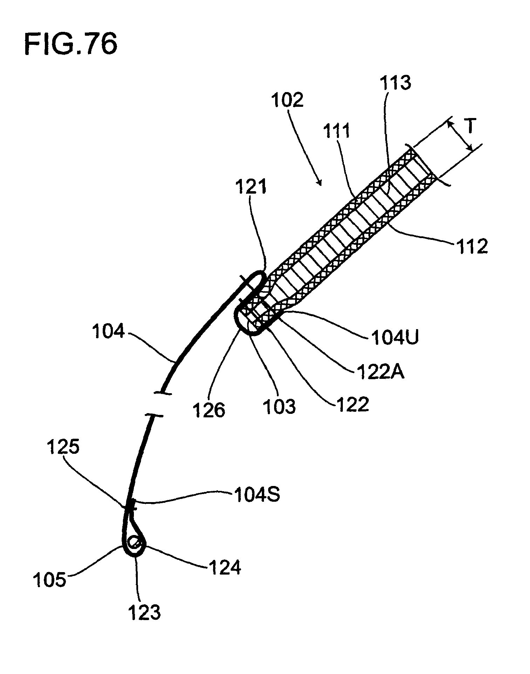

FIG. 76 shows a thirty-seventh embodiment of the present invention. The same reference numerals are used for portions the same as in each embodiment described above and a detailed description is given with the duplicate description of the same portions omitted.

The figure represents a modified example of the joint of the edge 103 of the three-dimensional textile 102 and the attachment face member 104. The inside edge 104U of the attachment face member 104 is folded to its obverse side to form an approximate-U-shaped folded portion 126, with which the edge 103 is enveloped. In that state, the folded portion 126 and the edge 103 are then sewed together by the thread 122, and further the overlapped portion of the folded portion 121 and the edge 103 are sewed together by the thread 122A that forms a stitch located inside the thread 122 substantially in parallel therewith.

### Thirty-eighth Embodiment

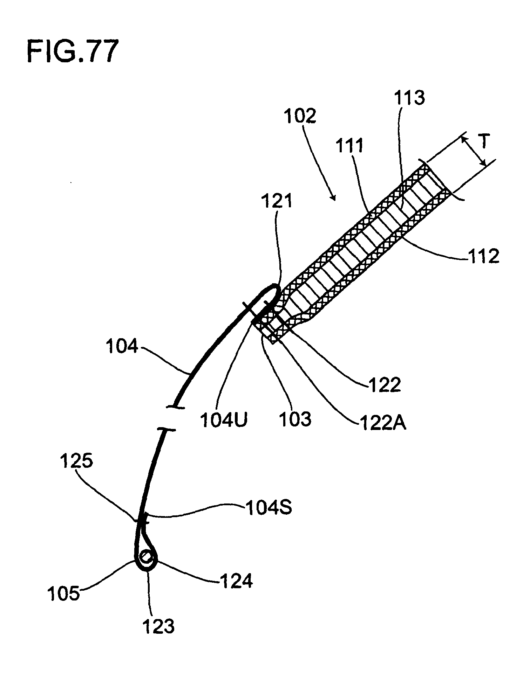

FIG. 77 shows a thirty-eighth embodiment of the present invention. The same reference numerals are used for portions the same as in each embodiment described above and a detailed description is given with the duplicate description of the same portions omitted.

According to the present embodiment, without the use of the contact belt 129, the inside edge 104U of the attachment face member 104 is sewed to the edge 103 by the threads 122, 122A, reducing the number of components.

### Thirty-ninth Embodiment

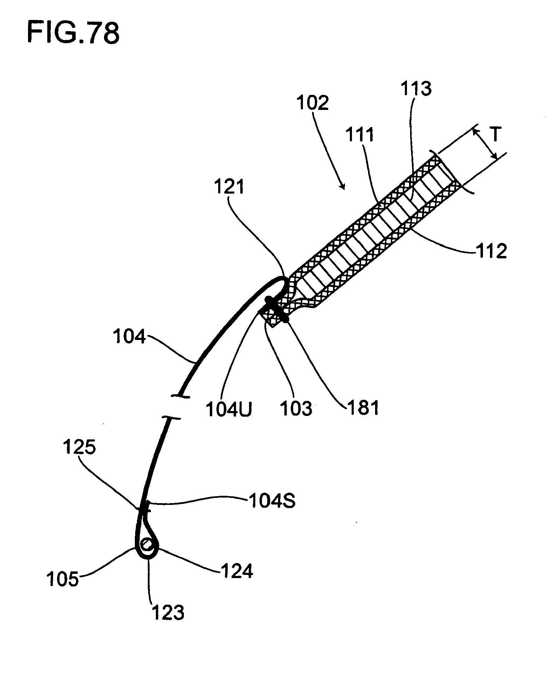

FIG. 78 shows a thirty-ninth embodiment of the present invention. The same reference numerals are used for portions the same as in each embodiment described above and a detailed description is given with the duplicate description of the same portions omitted. According to the present embodiment, the inside edge 104U located inside the folded portion 121 is joined to the edge 103 of the three-dimensional textile 102 through a welded member 181 formed by welding.

Thus, according to the present embodiment, the same functions and effects as those in each of the foregoing embodiments can be achieved. Further, the inside edge 104U located inside the folded portion 121 is welded. Hence, the welded member 181 is allowed to lie concealed at the reverse side of the folded portion 121.

The present invention is not limited to the foregoing embodiments and various modifications are possible within the scope of the present invention. For example, as the distortion-preventive member, a wide variety of materials, forms may be employed as long as the distortion-preventive member is one to be attached to the three-dimensional textile to prevent the distortion. Alternatively, the foregoing embodiments may be appropriately combined with each other. For example, the distortion-preventive member according to one embodiment may be combined with another, and the joint of the edge according to one embodiment may be combined with another, son on.

Furthermore, portions joined by sewing in the foregoing embodiments may be joined by welding or bonding, or otherwise, sewing, welding and bonding may be appropriately combined together. Moreover, the meshed patterns of the three-dimensional textile may not be limited to the lozenge patterns employed in the foregoing embodiments, but any suitable patterns may be employed, such as polygonal patterns including those of hexagon and quadrangle, approximate circle patterns, or elliptic patterns, etc.

## Claims

1. A seat cover (19) for saddle-type vehicle comprising a cover main body (24) for covering a flat top surface and side surfaces of a saddle-type vehicle seat (8) having a driver seat (16) and a passenger seat (17), said cover main body (24) being detachably provided on said saddle-type vehicle seat (8),**characterized in that**:
said seat cover (19) further comprises a supporting portion (18) for supporting a rump of a driver sitting on said driver seat (16) from backside and having a supporting face (36) on a front side with respect to a traveling direction of said saddle-type vehicle; and that said supporting portion (18) is arranged in the center with respect to a width direction of said cover main body (24) on an upper surface thereof.

2. The seat cover (19) for saddle-type vehicle according to claim 1, **characterized in that** said supporting portion (18) is formed so as to have a width less than that of said saddle-type vehicle seat (8), said supporting face (36) taking the form of a substantially crescent shape, having a concavely curved surface.

3. The seat cover (19) according to claim 2, **characterized in that**:
said cover main body (24) comprises an anterior portion (25), a driver portion (26), a passenger portion (27) and a posterior side portion (31), wherein said anterior portion (25), driver portion (26), passenger portion (27) and posterior side portion (31) are integrated with one another,
and that said anterior portion (25) and posterior side portion (31) are each made from a material harder than said driver portion (26) and passenger portion (27), formed to a length long enough to extend down to a bottom surface of said saddle-type vehicle seat, and that said cover main body (24) is attached to said saddle-type vehicle seat with tension being applied in an anteroposterior direction of said saddle-type-vehicle.

4. The seat cover (19) according to claim 2, **characterized in that** said driver portion is formed from a three-dimensional textile.

## Patentansprüche

1. Sitzabdeckung (19) für ein Fahrzeug mit Sattel, umfassend einen Abdeckungshauptkörper (24) zum Abdecken einer flachen Oberseite und von Seitenflächen eines Sitzes (8) des Fahrzeugs mit Sattel, der einen Fahrersitz (16) und einen Beifahrersitz (17) aufweist, wobei der Abdeckungshauptkörper (24) abnehmbar auf dem Sitz (8) des Fahrzeugs mit Sattel vorgesehen ist, **dadurch gekennzeichnet, dass**:
diese Sitzabdeckung (19) weiters einen Stützabschnitt (18) zum Stützen eines Rumpfes eines Fahrers von hinten umfasst, der auf diesem Fahrersitz (16) sitzt, und eine Stützfläche (36) auf einer Vorderseite in Bezug auf eine Fahrtrichtung dieses Fahrzeugs mit Sattel; und dass dieser Stützabschnitt (18) mittig in Bezug auf eine Breitenrichtung dieses Abdeckungshauptkörpers (24) auf einer Oberseite dessen angeordnet ist.

2. Sitzabdeckung (19) für das Fahrzeug mit Sattel nach Anspruch 1, **dadurch gekennzeichnet, dass** dieser Stützabschnitt (18) so ausgebildet ist, dass er eine geringere Breite aufweist als jene dieses Sitzes (8) des Fahrzeugs mit Sattel, wobei diese Stützfläche (36) die Form einer im Wesentlichen sichelförmigen Gestalt annimmt, aufweisend eine konkav gekrümmte Oberfläche.

3. Sitzabdeckung (19) nach Anspruch 2, **dadurch gekennzeichnet, dass**:
dieser Abdeckungshauptkörper (24) einen vorderen Abschnitt (25), einen Fahrerabschnitt (26), einen Beifahrerabschnitt (27) und einen hinteren Seitenabschnitt (31) aufweist, wobei dieser vordere Abschnitt (25), der Fahrerabschnitt (26), der Beifahrerabschnitt (27) und der hintere Seitenabschnitt (31) miteinander einstückig ausgebildet sind,
und dass dieser vordere Abschnitt (25) und der hintere Seitenabschnitt (31) aus einem Material gefertigt sind, das härter als jenes des Fahrerabschnitts (26) und des Beifahrerabschnitts (27) ist, ausgebildet auf eine Länge, die lang genug ist, um sich hinunter zu einer Bodenfläche dieses Sitzes des Fahrzeugs mit Sattel zu erstrecken, und dass dieser Abdeckungshauptkörper (24) an diesem Sitz des Fahrzeugs mit Sattel befestigt ist, wobei die Spannung in eine Vorwärts-Rückwärts-Richtung dieses Fahrzeugs mit Sattel angelegt wird.

4. Sitzabdeckung (19) nach Anspruch 2, **dadurch gekennzeichnet, dass** dieser Fahrerabschnitt aus einem dreidimensionalen Textilgewebe gebildet ist.

## Revendications

1. Housse de siège (19) pour véhicule du type à selle comprenant un corps principal de housse (24) permettant de couvrir une surface supérieure plate et des surfaces latérales d'un siège de véhicule du type à selle (8) comportant un siège conducteur (16) et un siège passager (17), ledit corps principal de housse (24) étant disposé de façon détachable sur ledit siège de véhicule du type à selle (8), **caractérisée en ce que** :
ladite housse de siège (19) comprend en outre une partie support (18) permettant de supporter un postérieur d'un conducteur assis sur ledit siège conducteur (16) depuis l'arrière et comportant une face de support (36) sur un côté avant par rapport à une direction de déplacement dudit véhicule du type à selle ; et **en ce que** ladite partie support (18) est agencée au centre par rapport à une direction de largeur dudit corps principal de housse (24) sur une surface supérieure de celui-ci.

2. Housse de siège (19) pour véhicule du type à selle selon la revendication 1, **caractérisée en ce que** ladite partie support (18) est formée pour avoir une largeur inférieure à celle dudit siège de véhicule du type à selle (8), ladite face de support (36) prenant sensiblement la forme d'un croissant, ayant une surface courbée de façon concave.

3. Housse de siège (19) selon la revendication 2, **caractérisée en ce que** :
ledit corps principal de housse (24) comprend une partie antérieure (25), une partie conducteur (26), une partie passager (27) et une partie latérale postérieure (31), où lesdites partie antérieure (25), partie conducteur (26), partie passager (27) et partie latérale postérieure (31) sont intégrées les unes avec les autres, et
**en ce que** lesdites partie antérieure (25) et partie latérale postérieure (31) sont chacune constituées d'un matériau plus dur que lesdites partie conducteur (26) et partie passager (27), formées à une longueur suffisamment grande pour s'étendre jusqu'en bas d'une surface inférieure dudit siège de véhicule du type à selle, et **en ce que** ledit corps principal de housse (24) est attaché audit siège de véhicule du type à selle avec une tension appliquée dans une direction antéropostérieure dudit véhicule du type à selle.

4. Housse de siège (19) selon la revendication 2, **caractérisée en ce que** ladite partie conducteur est formée d'un textile tridimensionnel.
